# EUROPEAN PATENT APPLICATION

(11) **EP 4 822 506 A1**
(43) Date of publication of application: **14.10.2026**
(21) Application number: 24899754.6
(22) Date of filing: 29.11.2024
(51) Int. Cl.: G06F 3/04845, G06F 3/04842

(54) **METHOD AND APPARATUS FOR IMAGE GENERATION, AND DEVICE AND STORAGE MEDIUM**

(30) Priority: 08.12.2023 CN 202311688888
(71) Applicant: Beijing Zitiao Network Technology Co., Ltd., Beijing 100190 (CN); Lemon Inc., Grand Cayman, KY1-1205 (KY)
(72) Inventor: CHEN, Jiajun, Beijing 100028 (CN); BUZINOVER, Michael, CULVER CITY California 90230 (US); LIU, Xu, Beijing 100028 (CN); LI, Cheng, Beijing 100028 (CN); LYU, Guowei, CULVER CITY California 90230 (US); WANG, Xiaolu, Beijing 100028 (CN); ZHAO, Shuanglin, Beijing 100028 (CN); ZHAO, Yixin, CULVER CITY California 90230 (US); LIU, Jing, Los Angeles, California 90066 (US); SANG, Shen, Los Angeles, California 90066 (US); HUANG, Youcai, Beijing 100028 (CN); ZHANG, Chenliang, Beijing 100028 (CN); LAI, Chunpong, Los Angeles, California 90066 (US); GUZI, Jonathan, CULVER CITY California 90230 (US); CHEN, Siding, Los Angeles, California 90066 (US); YANG, Tianyu, Los Angeles, California 90066 (US); LI, Shuang, Los Angeles, California 90066 (US); SRIMANNARAYANAN, Ashwin Badri, Los Angeles, California 90066 (US); CHEN, Jeffrey Jia-Jun, Los Angeles, California 90066 (US); RATHI, Ajit, Los Angeles, California 90066 (US)
(74) Representative: Marks & Clerk LLP
(86) International application number: PCT/CN2024/135924
(87) International publication number: WO 2025/119114

(57) **Abstract**

According to the embodiments of the disclosure, a method, an apparatus, a device, and a storage medium for image generation are provided. The method includes: presenting an element adjustment interface in response to an element adjustment request for a first image of a first virtual avatar, where the first virtual avatar includes media data representing an appearance feature of a first object, and the first image of the first virtual avatar has a first element; receiving adjustment information for the first element via the element adjustment interface; and presenting a second image of the first virtual avatar based on the received adjustment information, where the second image of the first virtual avatar has an adjusted first element. In this way, the flexibility and freedom of content creation are increased, and the diversification and personalization of content styles are increased. In this way, the interestingness of content interaction may be improved.

## Description

The present application claims priority to Chinese Patent Application No. 202311688888.8, filed on December 08, 2023, and entitled "METHOD, APPARATUS, DEVICE, AND STORAGE MEDIUM FOR IMAGE GENERATION", which is hereby incorporated by reference in its entirety.

### TECHNICAL FIELD

Example embodiments of the present disclosure generally relate to the field of computers, and in particular, to a method, an apparatus, a device, and a computer-readable storage medium for image generation.

### BACKGROUND

With the development of computer technologies, more and more applications are designed to provide various services for users. For example, a user may create, post, browse, comment on, and forward various types of content, including various media content such as videos, images, image sets, and audios, in an application. Interactivity and interest in such applications are important issues of concern.

### SUMMARY

In a first aspect of the present disclosure, a method for image generation is provided. The method includes: presenting an element adjustment interface in response to an element adjustment request for a first image of a first virtual avatar, where the first virtual avatar includes media data representing an appearance feature of a first object, and the first image of the first virtual avatar has a first element; receiving adjustment information for the first element via the element adjustment interface; and presenting a second image of the first virtual avatar based on the received adjustment information, where the second image of the first virtual avatar has an adjusted first element.

In a second aspect of the present disclosure, an apparatus for image generation is provided. The apparatus includes: an interface presenting module configured to present an element adjustment interface in response to an element adjustment request for a first image of a first virtual avatar, where the first virtual avatar includes media data representing an appearance feature of a first object, and the first image of the first virtual avatar has a first element; an information receiving module configured to receive adjustment information for the first element via the element adjustment interface; and an image presenting module configured to present a second image of the first virtual avatar based on the received adjustment information, where the second image of the first virtual avatar has an adjusted first element.

In a third aspect of the present disclosure, an electronic device is provided. The device includes at least one processing unit; and at least one memory, the at least one memory being coupled to the at least one processing unit and storing instructions executable by the at least one processing unit. The instructions, when executed by the at least one processing unit, cause the device to perform the method of the first aspect.

In a fourth aspect of the present disclosure, a computer-readable storage medium is provided. The computer-readable storage medium has a computer program stored thereon, and the computer program is executable by a processor to implement the method of the first aspect.

It should be understood that the content described in the summary section of the present disclosure is neither intended to limit key features or important features of the embodiments of the present disclosure, nor is intended to limit the scope of the present disclosure. Other features of the present disclosure will be readily envisaged through the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference numbers refer to the same or similar elements, where:
FIG. 1 shows a schematic diagram of an example environment in which the embodiments of the present disclosure may be implemented;
FIGS. 2A to 2Z show schematic diagrams of example interfaces for virtual avatar creation according to some embodiments of the present disclosure;
FIGS. 3A to 3L show schematic diagrams of example interfaces for stylized image generation according to some embodiments of the present disclosure;
FIGS. 4A to 4E show schematic diagrams of example interfaces for style adjustment according to some embodiments of the present disclosure;
FIGS. 5A to 5J show schematic diagrams of example interfaces for providing style adjustment information according to some embodiments of the present disclosure;
FIGS. 6A to 6E show schematic diagrams of example interfaces for customizing styles according to some embodiments of the present disclosure;
FIGS. 7A to 7G show schematic diagrams of example interfaces for providing customization information according to some embodiments of the present disclosure;
FIGS. 8A to 8I show schematic diagrams of example interfaces for reusing styles according to some embodiments of the present disclosure;
FIGS. 9A to 9M show schematic diagrams of example interfaces for managing stylized images according to some embodiments of the present disclosure;
FIGS. 10A to 10F show schematic diagrams of example interfaces for managing styles according to some embodiments of the present disclosure;
FIG. 11 shows a flowchart of a process for image generation according to some embodiments of the present disclosure;
FIG. 12 shows a flowchart of an apparatus for image generation according to some embodiments of the present disclosure; and
FIG. 13 shows a block diagram of an electronic device in which one or more embodiments of the present disclosure may be implemented.

### DETAILED DESCRIPTION OF EMBODIMENTS

The embodiments of the present disclosure will be described in more detail below with reference to the drawings. Although some embodiments of the present disclosure are shown in the drawings, it should be understood that the present disclosure may be implemented in various forms and should not be interpreted as being limited to the embodiments set forth herein. Instead, these embodiments are provided for a more thorough and complete understanding of the present disclosure. It should be understood that the drawings and embodiments of the present disclosure are only for illustrative purposes, and are not intended to limit the protection scope of the present disclosure.

In the description of the embodiments of the present disclosure, the term "include/comprise" and similar terms should be understood as open-ended inclusions, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below.

Here, unless explicitly stated, "in response to A" performing a step does not mean that the step is performed immediately after "A", but may include one or more intermediate steps.

It may be understood that the data involved in the technical solution (including but not limited to the data itself, acquisition or use of the data) shall comply with requirements of corresponding laws, regulations and related provisions.

It may be understood that before using the technical solutions disclosed in the embodiments of the present disclosure, the user shall be informed of the type, range of use, use scenarios, etc. of personal information involved in the present disclosure in an appropriate manner and the authorization of the user shall be obtained according to relevant laws and regulations.

For example, in response to receiving an active request from a user, prompt information is sent to the user to clearly prompt the user that the requested operation will require access to and use of the user's personal information, so that the user may independently choose whether to provide the personal information to software or hardware, such as an electronic device, an application, a server or a storage medium, that performs the operations of the technical solutions of the present disclosure based on the prompt information.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It may be understood that the above processes of notifying and obtaining user authorization are only illustrative, and does not limit the implementations of the present disclosure. Other methods that satisfy the relevant laws and regulations may also be applied to the implementations of the present disclosure.

As used herein, the term "element" or "image element" may refer to any suitable aspect or attribute of an image. For example, the element may include an image style (also abbreviated to as a style), an image background, an image foreground, or the like.

As used herein, the term "virtual avatar" may include media data representing an appearance feature of an object. The appearance feature may include a facial feature. The media data may include any suitable form of data, such as image data, video data, three-dimensional model data, and the like.

As briefly mentioned above, a user may create media content such as images, image sets, and videos in an application. With the development of machine learning technologies, digital tools based on machine learning models have been used to create virtual avatars for users. The user may also generate images with desired elements by using the virtual avatars, such as stylized images. Such a solution enables users to generate content similar to themselves.

However, such a solution still has some defects. For example, the available elements provided to users are very limited, for example, usually only a few available styles are provided to users. In addition, users cannot modify or customize elements according to their own preferences, which limits the flexibility of user creation. In addition, this may reduce users' willingness to continue to use.

Therefore, according to the embodiments of the present disclosure, an improved solution for image generation is proposed. In the solution according to the embodiments of the present disclosure, an element adjustment interface is presented in response to an element adjustment request for a first image of a first virtual avatar having a first element, the first virtual avatar including media data representing an appearance feature of a first object. Adjustment information for the first element is received via the element adjustment interface. A second image of the first virtual avatar having an adjusted first element is presented based on the received adjustment information.

According to the embodiments of the present disclosure, the user is supported to use the existing element to generate the image, and the user is supported to adjust the existing element to satisfy the user's own preferences. In this manner, the flexibility and freedom of content creation are increased, and the diversification and personalization of the image elements are increased. In this way, the interest in content interaction may be improved.

The example embodiments of the present disclosure will be described below with reference to the drawings.

### EXAMPLE ENVIRONMENT

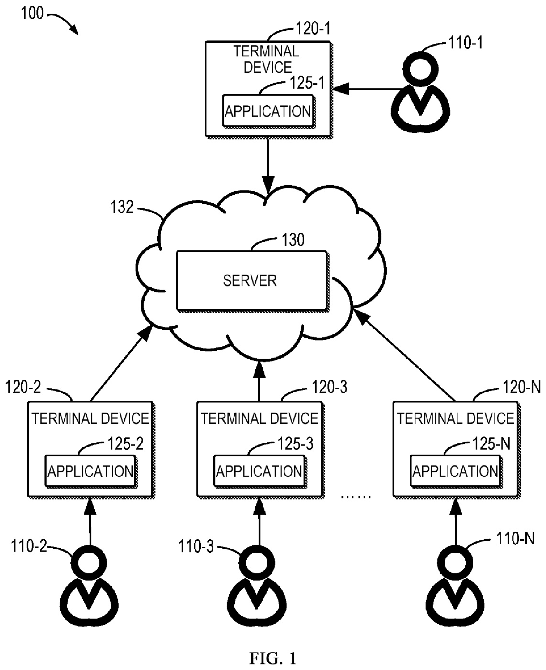

FIG. 1 shows a schematic diagram of an example environment 100 in which the embodiments of the present disclosure may be implemented. In the environment 100, one or more users 110-1, 110-2, 110-3, ..., 110-N may post and/or browse media data (which may also be referred to as multimedia content, multimedia data, media content, and the like) in a target platform through respective associated terminal devices 120-1, 120-2, 120-3, ..., 120-N.

For the convenience of discussion, the users 110-1, 110-2, 110-3, ..., 110-N may be collectively or individually referred to as a user 110, and the terminal devices 120-1, 120-2, 120-3, ..., 120-N may be collectively or individually referred to as a terminal device 120. In a media data posting scenario, the user 110 may also be referred to as a poster of the media data. In a media data browsing scenario, the user 110 may also be referred to as an observer, a browser, or a viewer of the media data.

The terminal device 120 may be installed with a platform that supports media data posting and/or supports media data playback. Such a platform may be, for example, an application or a website. The user 110 may operate the terminal device 120 to access the corresponding application or website. In some embodiments, the platform for posting the media data and the platform for playing the media data may be the same or different platforms. Illustratively, the user 110-1 performs editing and posting for the media data on a first platform, and the posting operation indicates that the media data is posted to a second platform. The user 110-2 may browse the media data on the second platform.

In some embodiments, the terminal device 120 may be installed with an application 125 supporting media data posting (that is, the terminal device 120-1 is installed with an application 125-1, the terminal device 120-2 is installed with an application 125-2, the terminal device 120-3 is installed with an application 125-3, ..., and the terminal device 120-N is installed with an application 125-N). It should be noted that the applications 125 installed in different terminal devices 120 may be the same application or may be different applications (for example, in different versions). The application 125 may be any appropriate application with a media data posting function, for example, a social application, a content sharing application, an office support application, and the like.

In the environment 100 of FIG. 1, if the application 125 is active, the terminal device 120 may present a user interface of the application 125. This user interface may include various interfaces that may be provided by the application 125, such as a user interface supporting message interaction, a user interface supporting content browsing, a message sending and receiving interface, and the like. Via different user interfaces, the application 125 may provide different content to the user 110. Via an appropriate manner, such as clicking or selecting any appropriate interface element in the user interface, the application 125 may also provide the user 110 with the selection and switching of the presentation mode of the associated content.

In some embodiments, different terminal devices 120 may also communicate with a server 130 through a network 132 to implement the supply of message interaction services. The server 130 may provide functions such as management, configuration and maintenance of the application 125.

The terminal device 120 may be any type of mobile terminal, fixed terminal or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a television receiver, a radio broadcast receiver, an e-book device, a game device, or any combination of the foregoing, including accessories and peripherals of these devices or any combination thereof. In some embodiments, the terminal device 120 may also support any type of user-specific interface (such as a "wearable" circuit, etc.). The server 130 may be various types of computing systems/servers that may provide computing power, including but not being limited to mainframes, edge computing nodes, computing devices in cloud environments, and the like.

It should be understood that the structures and functions of various components in the environment 100 are described for illustrative purposes only, and do not imply any limitation on the scope of the present disclosure. Various example implementations of the present disclosure will be described in detail below.

### EXAMPLE INTERFACE

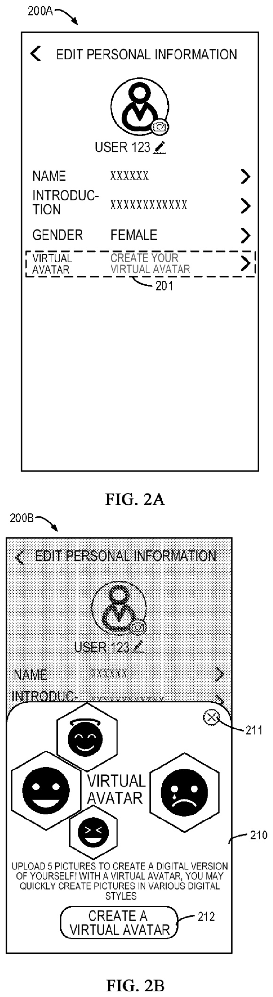

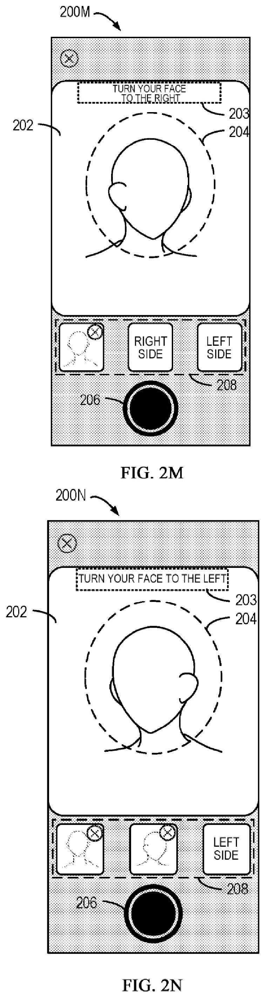

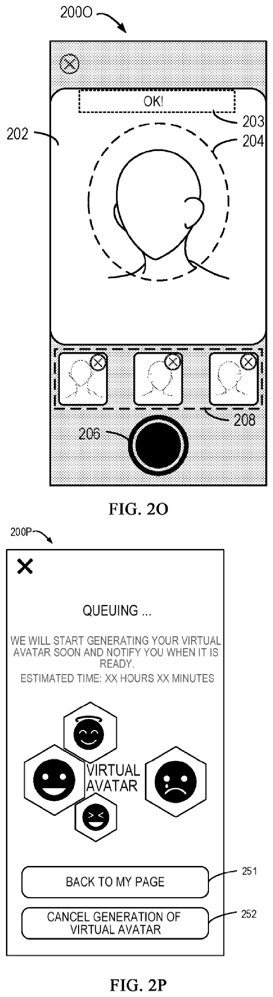

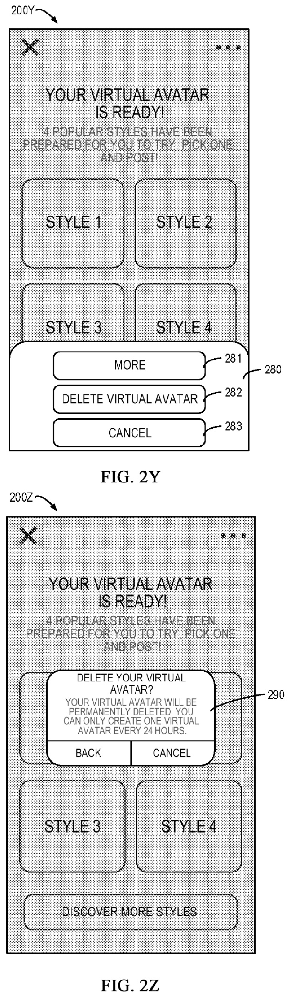

For ease of understanding, some example embodiments of the present disclosure will be described below in conjunction with example interfaces of FIGS. 2A to 10F. FIGS. 2A to 10F show schematic diagrams of example interfaces according to some embodiments of the present disclosure. It should be understood that the interfaces shown in the drawings are only examples, and various interface designs may actually exist. Various interface elements in the interface may have different arrangements and different visual representations, one or more of the interface elements may be omitted or replaced, and there may also be one or more other interface elements. The embodiments of the present disclosure are not limited in this regard.

The example interfaces shown in FIGS. 2A to 10F may be presented at the terminal device 120. For the convenience of discussion, the example interfaces/example pages shown in FIGS. 2A to 10F will be described with reference to the environment 100 of FIG. 1. It should be noted that, herein, the operations performed by the terminal device 120 may be specifically performed by means of a related application installed locally. In some embodiments, certain operations may need to be completed with the support of a server (such as the server 130) or other devices. For ease of understanding, the following uses an example in which the terminal device 120 performs an operation by itself for illustrative description.

In some embodiments, the terminal device 120 may obtain a virtu al avatar corresponding to an object based on an image including an appearance of the object and input by the user 110. The virtual avatar may include media data representing an appearance feature of the object, such as image data, video data, three-dimensional model data, or the like, representing the appearance feature of the object. In some embodiments, the appearance feature may include a facial feature. In this way, the virtual objects corresponding to different objects are distinguishable.

The user 110 may create a virtual avatar associated with the user 110. The object here may include any appropriate object such as a human, an animal, a cartoon image, etc., and the present disclosure does not limit a specific object. In particular, in some embodiments, the object may be the user 110 himself/herself. It may be understood that the virtual avatar, the image, etc. here may be generated locally by the terminal device 120, or may be generated in the cloud by means of the server 130. For the convenience of description, the following uses an example in which the user 110 inputs an image including a human face for illustrative description.

In some embodiments, according to an operation of the user 110, the terminal device 120 may obtain an image of the created virtual avatar having a specific element, which may also be referred to as an element-specific image. In some embodiments, the element may be a style. The terminal device 120 may obtain an image of the created virtual avatar having a certain style, which may also be referred to as a stylized image. That is, the stylized image may be generated and presented for the user 110. In the embodiments of the present disclosure, the style or the image style may include any type of style, such as, but not limited to, cartoon, watercolor, crayon, sketch, comic, and the like.

In some embodiments, both the creation of the virtual avatar and the generation of the element-specific image may be implemented by the terminal device 120 and/or the server 130 by means of a machine learning model. The machine learning model here may be any appropriate model, and may not be limited by the present disclosure. Illustratively, in the case of generating an image, the terminal device 120 may generate a prompt based on configuration information of the element to be used, and provide the prompt to a model for generating the image (that is, a target model). The terminal device 120 may obtain the output of the target model and obtain the image based on the output.

As mentioned above, the element may include, but is not limited to, various aspects such as a style, a foreground, a background, and the like. Some example embodiments of the embodiments of the present disclosure are described below by using the style as an example of the element. However, it should be understood that the embodiments described with reference to the style may be applied to other types of elements.

### Example Interface for Creating Virtual Avatar

The following describes example interaction for creating a virtual avatar. In some embodiments, the terminal device 120 may provide an entry associated with a virtual avatar in a user information interface of the user 110. In the case where the user 110 has not created a virtual avatar, the entry may be a creation entry of the virtual avatar. FIGS. 2A to 2C show schematic diagrams of examples 200A to 200C of user information interfaces according to some embodiments of the present disclosure. As shown in FIG. 2A, the terminal device 120 may provide a user information interface as shown in the example 200A. In the case where the user 110 (for example, "user 123" in the figure) has not created a virtual avatar, the terminal device 120 may provide a creation entry 201 for the virtual avatar in the example 200A. The terminal device 120 may present the example 200B shown in FIG. 2B in response to detecting a trigger operation for the creation entry 201. The trigger operation includes, but is not limited to, any appropriate operation such as a click operation, a double-click operation, a long press operation, a slide operation, a drag operation, and the like. The present disclosure does not limit a specific trigger operation.

In the example 200B, the terminal device 120 may present a prompt panel 210 for prompting to create a virtual avatar. The prompt panel 210 may present prompt information (for example, the text "Upload 5 pictures to create a digital version of yourself! With a virtual avatar, you can quickly create various digital style pictures") prompting how to create the virtual avatar. The prompt panel 210 may also present, for example, an example effect of the virtual avatar or different image styles (for example, an example virtual avatar may be presented). The prompt panel 210 may also include a creation control 212 and a cancel control 211. The terminal device 120 may determine to cancel the creation of the virtual avatar and return to presenting the example 200A in response to receiving a trigger operation for the cancel control 211. Alternatively or additionally, in some embodiments, the terminal device 120 may determine to cancel the creation of the virtual avatar and return to presenting the example 200A in response to receiving a trigger operation for an area other than the prompt panel 210 in the example 200B.

It should be noted that, regarding the prompt logic of the prompt panel 210 for prompting to create the virtual avatar, in some embodiments, after every time the terminal device 120 detects the trigger operation for the creation entry 201, the prompt panel 210 is presented by default. In some embodiments, the terminal device 120 may also present the prompt panel 210 only when the trigger operation for the creation entry 201 is detected for the first time or when the trigger operation for the creation entry 201 is detected for the first few times (which may be a preset number of times).

In response to detecting the trigger operation for the creation control 211, the terminal device 120 may determine that a creation request for virtual avatar is received, and present an image obtaining interface. The image obtaining interface may include an image capturing interface and/or an image selection interface. The terminal device 120 may capture an image in the image capturing interface by using a camera. The terminal device 120 may select an image stored locally in the terminal device 120 in the image selection interface. The image stored locally here includes an image previously captured by the terminal device 120 through the camera and an image obtained by the terminal device 120 from the cloud, from other devices, etc.

In some embodiments, if the creation request for the virtual avatar is detected, the terminal device 120 may provide an option card including at least a first option corresponding to the image capturing interface and a second option corresponding to the image selection interface. The terminal device 120 may determine that an access permission for the image capturing interface is obtained and present the image capturing interface in response to detecting a selection operation for the first option. In response to detecting a selection operation for the second option, the terminal device 120 may also determine that an access permission for the image selection interface is obtained, and present the image selection interface. The selection operation here may include any appropriate operation such as a click operation, a double-click operation, a long press operation, a slide operation, a drag operation, and the like.

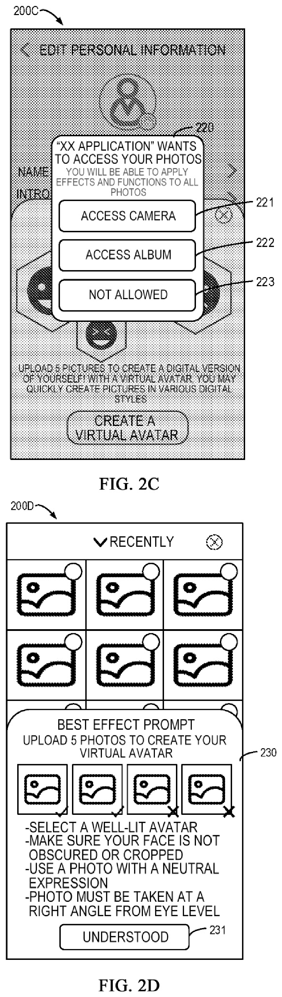

Illustratively, as shown in FIGS. 2B and 2C, the terminal device 120 may present the example 200C, for example, in response to detecting a trigger operation for the creation control 211. The example 200C includes an option card 220. The terminal device 220 may present an option 221 corresponding to the image capturing interface and an option 222 corresponding to the image selection interface in the option card 220. The terminal device 120 may present the image capturing interface in response to detecting a selection operation for the option 221, and present the image selection interface in response to detecting a selection operation for the option 222. The terminal device 220 may also present an option 223 in the option card 220, for example. The terminal device 110 may determine to cancel presenting the image capturing interface or the image selection interface and return to presenting the example 200B, for example, in response to detecting a selection operation for the option 223.

In some embodiments, the terminal device 120 may also pre-determine a default interface. The terminal device 120 presents the preset default interface in response to detecting a creation request for the virtual avatar. The terminal device 120 may present other interfaces in response to detecting a trigger operation for any appropriate interface element in the default interface. Illustratively, the default interface may be an image selection interface, and the terminal device 120 may switch to presenting the image capturing interface in response to detecting a trigger operation for any appropriate interface element (such as an interface switching control) in the image selection interface.

In some embodiments, the terminal device 110 may present the image selection interface in response to detecting a selection operation for the option 222 in the example 200C. Alternatively or additionally, in some embodiments, the terminal device 120 may also present a default image selection interface in response to detecting the creation request for the virtual avatar (such as the trigger operation for the creation entry 201 in the example 200A, the trigger operation for the creation control 212 in the example 200B, etc.). The terminal device 120 may present a prompt panel for providing prompt information in the image selection interface.

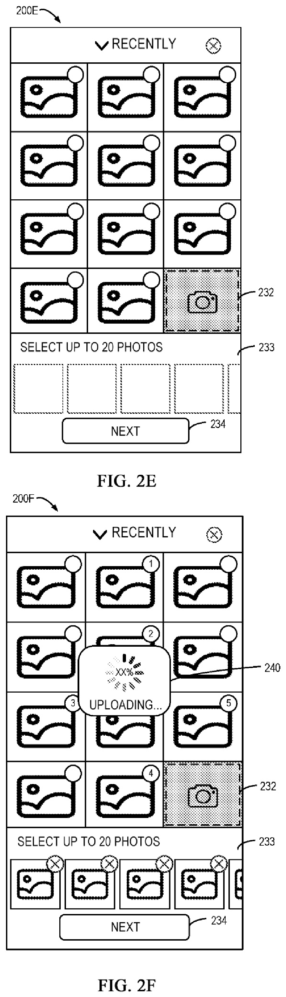

As shown in FIG. 2D, the terminal device 120 may present, for example, an example 200D including a prompt panel 230. The example 200D may be, for example, an image selection interface including a prompt panel. The prompt panel 230 may also present, for example, an example of an appropriate target image (for example, an image that satisfies a condition related to a facial area) and an example of an inappropriate target image (for example, an image that does not satisfy the condition related to the facial area). The prompt panel 230 also includes an operation control 231. The terminal device 120 may cancel presenting the prompt panel 230 in response to detecting a trigger operation for the operation control 231 or any area other than the prompt panel 230 in the example 200D. After canceling presenting the prompt panel 230, the terminal device 120 may present an example 200E shown in FIG. 2E, for example. The example 200E may be, for example, an image selection interface without a prompt panel. The example 200E may present a plurality of images with access permission.

Similarly, regarding the prompt panel 230, in some embodiments, every time the terminal device 120 presents the image selection interface, the image selection interface including the prompt panel 230 is presented by default. In some embodiments, the terminal device 120 may also present the image selection interface including the prompt panel 230 only when the image selection interface is presented for the first time (or when the image selection interface is presented for the first few times (which may be a preset number of times)), and then when the image selection interface is presented again, the image selection interface without the prompt panel 230 is presented.

As shown in FIG. 2E, the example 200E may also include an area 233 presenting a selected image. In the case where the user has not selected an image, the terminal device 120 may not present any image in the area 233. The terminal device 120 may determine that an image is selected in response to receiving a selection operation for any image presented in the image selection interface (for example, a selection operation for a captured image). In this case, the terminal device 120 may also present the selected image in the area 233.

In some embodiments, the terminal device 120 may also determine whether the selected image satisfies a condition related to the facial area (for example, whether it is an image including a face of an object). The terminal device 120 may determine whether the selected image satisfies the condition related to the facial area through a series of face detection models, for example. The terminal device 120 may present the selected image in the area 233, for example, in the case of determining that the selected image satisfies the condition related to the facial area. The terminal device 120 may also present prompt information prompting that the image does not satisfy the condition related to the facial area and the image may not be selected, for example, in the case of determining that the selected image does not satisfy the condition related to the facial area.

In some embodiments, to ensure the effect of the created virtual avatar, the terminal device 120 may need to obtain a plurality of images. The number of the plurality of images may be any appropriate number that satisfies a virtual avatar creation requirement. The number of images and/or a range of the number of images that satisfy the virtual avatar creation requirement may be preset. For example, if the number of images that satisfy the virtual avatar creation requirement is preset to be 5 by the user, the user needs to select 5 images so that the terminal device 120 may obtain these 5 images. For another example, if the range of the number of images that satisfy the virtual avatar creation requirement is preset to be 5 to 20 by the user, the user needs to select any number of images from 5 to 20 (for example, 10 images) so that the terminal device 120 may obtain these 5 images.

The area 233 may also include an operation control 234. The terminal device 120 may obtain a selected set of images in response to detecting a trigger operation for the operation control 234. For example, the terminal device 120 may present an example 200F of the interface shown in FIG. 2F during the process of obtaining the selected set of images. The terminal device 120 may present an interface element 240 indicating that the terminal device 120 is obtaining the selected set of images in the example 200F.

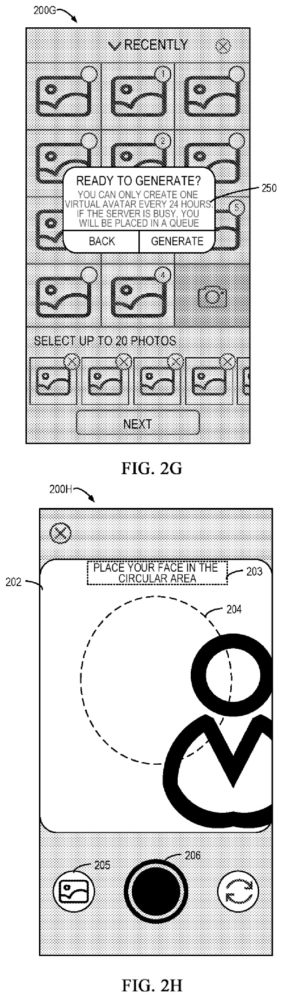

In some embodiments, the terminal device 120 may present a virtual avatar generation interface in response to obtaining the selected set of images. In some embodiments, in order to perform secondary determination on the selected set of images and whether to generate the virtual avatar, the terminal device 120 may also present an example 200G shown in FIG. 2G in response to obtaining the selected set of images. The terminal device 120 may present a card 250 in the example 200G for prompting to confirm whether to generate the virtual avatar. The card 250 includes a return control and a generation control. The terminal device 120 may cancel presenting the card 250 in response to detecting a trigger operation for the return control in the card 250. The terminal device 120 may start generating the virtual avatar in response to detecting a trigger operation for the generation control in the card 250.

Referring back to FIG. 2E, the image selection interface shown in the example 200E may also include an operation control 232. The terminal device 120 may switch to presenting the image capturing interface in response to detecting a trigger operation for the operation control 232. In some embodiments, the terminal device 120 may also determine, in response to detecting a selection operation for the selection 221 in the example 200C, that a permission to access the camera is obtained and present the image capturing interface. In some embodiments, the terminal device 120 may also present a default image capturing interface in response to detecting a creation request for the virtual avatar (such as a trigger operation for the creation entry 201 in the example 200A, a trigger operation for the creation control 212 in the example 200B, etc.).

The terminal device 120 may present, for example, an example 200H shown in FIG. 2H. The example 200H may be an example of the image capturing interface, for example. The terminal device 120 may present an image captured by using a camera in the area 202 of the example 200H. In some embodiments, the terminal device 120 may also present a border 204 and an area 203 presenting prompt information in the area 202. The terminal device 120 may determine, for example, whether the captured image satisfies a condition related to the facial area. The condition related to the facial area may include, for example, at least a condition that a facial area of a target object in the captured image is located within the border 204. As mentioned above, the terminal device 120 may determine whether the captured image satisfies the condition related to the facial area by using a series of face detection models.

In some embodiments, if it is determined that the image captured in the example 200H does not satisfy the condition related to the facial area, the terminal device 120 may present the corresponding prompt information in the area 203. The prompt information here may be fixed prompt information that is set in advance. For example, it may be prompt information such as "Please adjust the face position". The prompt information may also be determined based on one or more conditions that are not satisfied in at least one condition. Illustratively, if it is determined that the captured image does not satisfy the condition that the facial area of the target object in the captured image is located within the border 204, the terminal device 120 may present prompt information such as "Put your face in the preset area" in the area 203. As shown in FIG. 2H, in response to the facial area being located in the area outside the border 204 (including two possibilities that the facial area is entirely located outside the border 204 or the facial area is partially located outside the border 204), the terminal device 120 may present the prompt information "Put your face in the preset area" in the area 203. The area 203 may be located at any appropriate position in the example 200H, and for example, it may be presented on the top layer of all layers. For example, the area 203 may be superimposed and presented above the area 202, etc.

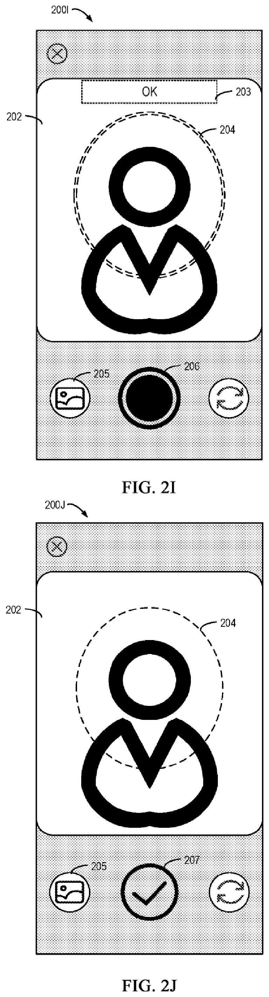

In some embodiments, if it is determined that the captured image satisfies the condition related to the facial area, the terminal device 120 may present prompt information in the area 203 that the image may be captured. As shown in FIG. 2I, if it is determined that the captured image satisfies the condition related to the facial area, the terminal device 120 may present prompt information "OK" in the area 203 of an example 200I to prompt the user that the current image satisfies the condition related to the facial area and the image may be captured. The terminal device 120 may determine that an image capturing operation is received and capture the image currently presented in the area 202 in response to detecting a trigger operation for a capturing control 206.

After obtaining the captured image, the terminal device 120 may present an example 200J shown in FIG. 2J. The example 200J may present the captured image and a mark 207, for example. The mark 207 is used to indicate that the image currently captured satisfies the condition related to the facial area and the image is successfully obtained by the terminal device 120.

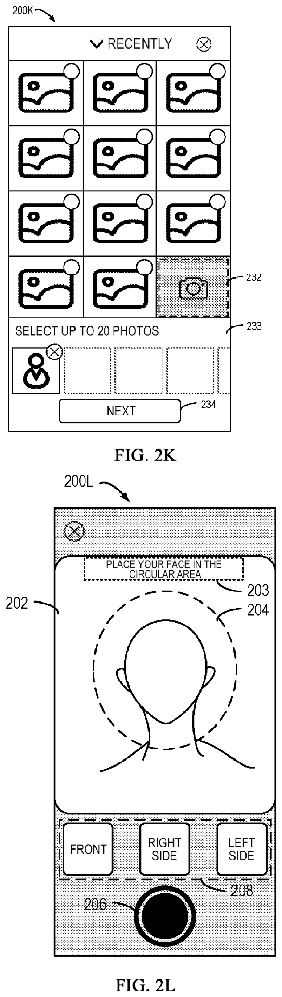

As shown in FIGS. 2H to 2J, the image capturing interface (for example, the example 200H, the example 200I, the example 200J) may also present an operation control 205. The terminal device 120 may switch to presenting the image selection interface in response to receiving a trigger operation for the operation control 205. The terminal device 120 may present an example 200K shown in FIG. 2K, for example, and the example 200K shows an example of the image selection interface. The terminal device 120 may present an image captured by the image capturing interface in an area 233 of the example 200K.

It should be noted that the terminal device 120 may obtain the virtual avatar only based on a plurality of images captured via the image capturing interface, may obtain the virtual avatar only based on a plurality of images selected via the image selection interface, or may obtain the virtual avatar based on a combination of at least one image captured via the image capturing interface and at least one image selected via the image selection interface. Which images are specifically used to obtain the virtual avatar may depend on an operation of the user 110. Therefore, the user 110 may flexibly select the captured image or capture a new image.

In some embodiments, if the terminal device 120 obtains the virtual avatar only based on a plurality of images selected via the image selection interface, the terminal device 120 may determine the plurality of selected images in response to receiving a trigger operation for the operation control 234 shown in the example 200E to the example 200G, and obtain the virtual avatar based on the plurality of images.

In some embodiments, if the terminal device 120 obtains the virtual avatar based on a combination of at least one image captured via the image capturing interface and at least one image selected via the image selection interface, the terminal device 120 may obtain a plurality of selected images in response to receiving a selection operation for the plurality of images in the example 200K. The terminal device 120 may obtain the virtual avatar based on the image captured by the image capturing interface and the plurality of selected images that are presented in the area 233.

In some embodiments, if the terminal device 120 obtains the virtual avatar only based on the plurality of images captured via the image capturing interface, the terminal device 120 may present examples 200L to 200O shown in FIGS. 2L to 2O. The examples 200L to 200O show a plurality of examples of the image capturing interface. It may be understood that in order to ensure the effect of the virtual avatar generated subsequently only based on the plurality of images captured via the image capturing interface, the terminal device 120 may need to obtain images including faces at different angles. The examples 200L to 200O may present an area 208. The area 208 may present a prompt indicating to obtain a plurality of images including faces at different angles (it may be understood that although 3 images are shown in the figure, the plurality of images here may be in any number). The terminal device 120 may also present, in the area 203, prompt information indicating to obtain faces at different angles. For example, in response to obtaining an image including the right side of the face, the terminal device 120 may present prompt information "Turn your face to the right" in the area 203. The terminal device 120 may also present the obtained image at a corresponding position in the area 208. The terminal device 120 may then obtain the virtual avatar based on the plurality of images presented in the area 208.

The terminal device 120 may determine that an operation indicating to create the virtual avatar is received and start to obtain the virtual avatar, for example, in response to receiving a trigger operation for the operation control 234. The terminal device 120 may create the virtual avatar by means of a machine learning model, and the machine learning model may be deployed locally on the terminal device 120 or on the server 130. For example, a plurality of images specified by the user 110 may be provided to the machine learning model for it to generate the virtual avatar.

As described above, in some embodiments of the present disclosure, the user 110 may not be required to distinguish these selected images, for example, without specifying which of these images are front images of the object. This is beneficial for the user to specify images more conveniently.

It should be noted that in the case where the plurality of obtained images all include a face of the same object (for example, a first object) and only include the face of the object, the terminal device 120 may generate a virtual avatar (for example, a first virtual avatar) corresponding to the object based on the plurality of obtained images. In the case where the plurality of obtained images includes faces of a plurality of objects, the terminal device 120 may determine priorities respectively corresponding to the plurality of objects. The terminal device 120 may, for example, determine a priority corresponding to each object based on the number of faces of each object. For example, if 10 images are obtained in total, and among these 10 images, 6 images include a face of a first object, 5 images include a face of a second object, and 3 images include a face of a third image (it may be understood that the same image may include faces of a plurality of objects, and the first object, the second object, and the third object are three different objects), the terminal device 120 may determine that a priority of the first object > a priority of the second object > a priority of the third object. The terminal device 120 may then generate a virtual avatar corresponding to the first object.

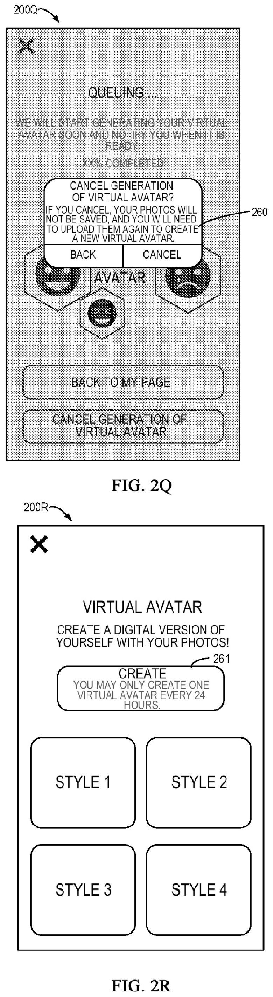

In the process of generating the virtual avatar, the terminal device 120 may present an example 200P shown in FIG. 2P. The example 200P shows an example of a creation progress interface of the virtual avatar. The example 200P includes prompt information indicating a creation progress of the virtual avatar. For example, the example 200P includes prompt information "Estimated time: XX hours XX minutes". The example 200P may also include an operation control 251 and an operation control 252. The terminal device 120 determines to cancel generation of the virtual avatar in response to receiving a trigger operation for the operation control 252. The terminal device 120 may switch back to presenting the example 200A shown in FIG. 2A, for example. To avoid accidental touch, the terminal device 120 may also, for example, present a card prompting to confirm whether to cancel the generation of the virtual avatar. As shown in FIG. 2Q, in an example 200Q, the terminal device 120 may present a card 260. The terminal device 120 may determine to continue generating the virtual avatar in the case of detecting a return control in the card 260. The terminal device 120 may cancel generation of the virtual avatar in the case of detecting a cancel control in the card 160. The terminal device 120 may switch back to presenting the example 200A shown in FIG. 2A, or switch to presenting an example 200R shown in FIG. 2R, for example. The example 200R includes an operation control 261. The terminal device 120 may repeat the above operations of obtaining images and generating the virtual avatar, for example, in response to detecting a trigger operation for the operation control 261.

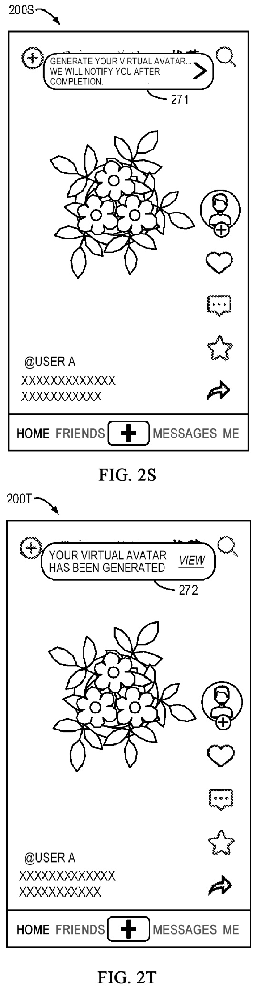

Referring back to FIG. 2P, the terminal device 120 may also switch to presenting other interfaces that may be provided by the application 120 in response to detecting a trigger operation for the operation control 251. Illustratively, the terminal device 120 may switch to presenting a content recommendation interface (for example, FIG. 200S) shown in FIG. 2S in response to detecting a trigger operation for the operation control 251. It may be understood that the terminal device 120 may also present any appropriate interface in response to detecting the trigger operation for the operation control 251, which may not be limited by the present disclosure.

Thee example 200S may include an entry 271, for example. The terminal device 120 may present, at the entry 271, prompt information (for example, the text "Generating your virtual avatar ...") indicating that the virtual avatar is being generated. In some embodiments, the terminal device 120 may also present creation progress information of the virtual avatar (for example, a first virtual avatar) at the entry 271. For example, the terminal device 120 may present the text "Created: XX%" at the entry 271 to present the creation progress information of the first virtual avatar. The terminal device 120 may switch back to presenting the example 200P in response to detecting a trigger operation for the entry 271.

After the creation of the virtual avatar is completed, the terminal device 120 may also provide a push notification to indicate that the creation of the virtual avatar is completed. The push notification may include a first viewing entry for viewing the created virtual avatar. In some embodiments, the terminal device 120 may also provide different styles of first viewing entry. Illustratively, if the user interface currently presented by the terminal device 120 is an interface provided by the application 120, the terminal device 120 may provide a first viewing entry in a first style, and if the user interface currently presented by the terminal device 120 is not an interface that may be provided by the application 120, the terminal device 120 may provide a first viewing entry in a second style.

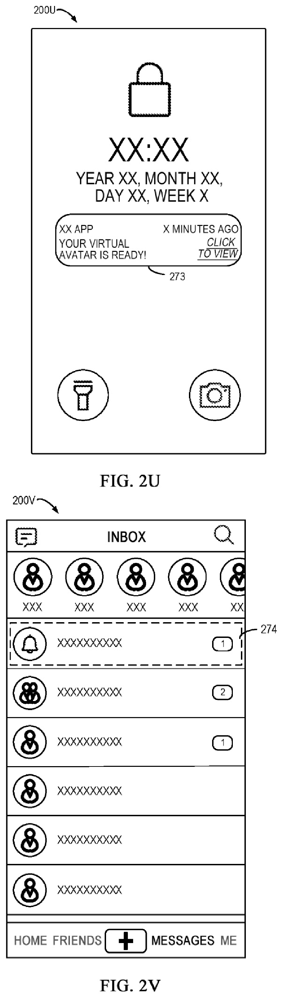

As shown in FIGS. 2T and 2U, an example 200T may be, for example, a content recommendation interface provided by the application 120, and an example 200U may be, for example, an interface not provided by the application 120 (that is, an interface other than the interface that may be provided by the application 120). The terminal device 120 may provide a first viewing entry 272 in the example 200T and a first viewing entry 273 in an example 800B, for example. The terminal device 120 may then present the created virtual avatar in response to detecting a trigger operation for the first viewing entry 272 or the first viewing entry 273.

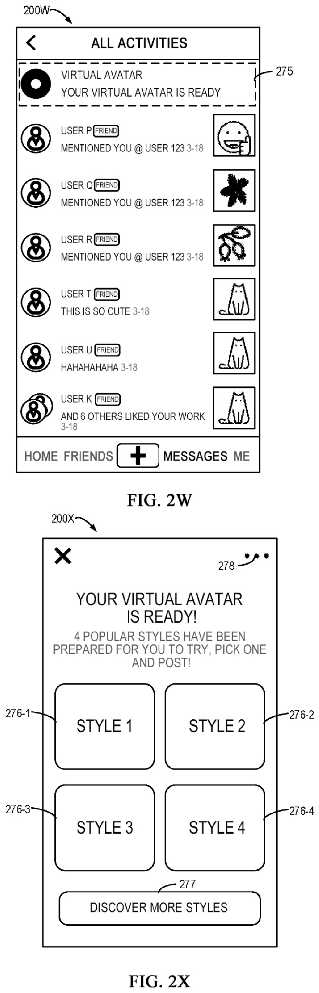

In some embodiments, the terminal device 120 may also provide a second viewing entry for the virtual avatar in the user interface to view the created virtual avatar after the creation of the virtual avatar is completed. The user interface including the second viewing entry may be, for example, a message interface of the user. As shown in FIGS. 2V and 2W, an example 200V and an example 200W may be, for example, message interfaces of the user. The terminal device 120 may present a notification message viewing entry 274 in the message interface shown in the example 200V, for example, in response to the virtual avatar being generated. In some embodiments, the notification message viewing entry 274 may also be fixedly presented in the example 200V, and the terminal device 120 presents a message prompt (for example, presents the number "1") at the notification message viewing entry 274 in response to the virtual avatar being generated. The terminal device 120 presents a message interface shown in the example 200W in response to detecting a trigger operation for the notification message viewing entry 274. A second viewing entry 275 is included in the example 200W. The terminal device 120 presents the created virtual avatar in response to detecting a trigger operation for the second viewing entry 275.

In some embodiments, the terminal device 120 may also present an avatar information interface (that is, examples 200X to 200Z) of the virtual avatar shown in FIGS. 2X to 2Z. The terminal device 120 may present the avatar information interface, for example, in response to the virtual avatar having been generated or in response to a trigger for the avatar information of the virtual avatar. The avatar information interface may include at least one of a viewing entry corresponding to at least one style (for example, an entry 276-1, an entry 276-2, an entry 276-3, an entry 276-4, or the like, and the present disclosure does not limit the number of at least one style) and a startup interface entry (for example, an entry 277) for stylized image generation. The terminal device 120 may present a style information interface (as described below) of a certain style in response to detecting a trigger operation for a viewing entry (for example, the entry 276-1) corresponding to the style. The terminal device 120 may switch to presenting a startup interface for stylized image generation in response to detecting a trigger operation for the startup interface entry (for example, the entry 277), as described below.

The terminal device 120 may also present an entry 278 in the example 200X to provide more operations for the virtual avatar. The terminal device 120 may present the example 200Y of an interface shown in FIG. 2Y, for example, in response to detecting a trigger operation for the entry 278. The example 200Y includes a panel 280. The panel 280 may include, for example, a control 281, a control 282, and a control 283. The terminal device 120 may present a user interface including more operation controls for the virtual avatar in response to receiving a selection operation for the control 281. The terminal device 120 may cancel presenting the panel 280 in response to receiving a selection operation for the control 283. The terminal device 120 may switch to presenting the interface shown in the example 200X, for example. The terminal device 120 may determine that a deletion operation for the virtual avatar is received in response to receiving a selection operation for the control 282. To avoid accidental touch, the terminal device 120 may switch to presenting the interface shown in the example 200Z. The example 200Z presents a card 290. The card 290 includes prompt information prompting to confirm whether to delete the virtual avatar. The terminal device 120 may determine to delete the virtual avatar in response to receiving a trigger operation for a deletion control in the card 290. The terminal device 120 may determine to cancel deleting the virtual avatar in response to receiving a trigger operation for a return control in the card 290. The terminal device 120 may return to presenting the example 200X or the example 200Y, for example.

### Example Interface for Generating Element-Specific Image

An example process of generating the element-specific image is described below. In some embodiments, the element-specific image generation may be triggered through a startup interface for image generation. Illustratively, the terminal device 120 may present the startup interface for image generation in response to a preset operation. Such a preset operation may include, for example, the trigger operation for the startup interface entry (for example, the entry 277) in the avatar information interface (for example, the example 200X) of the virtual avatar mentioned above. That is, the terminal device 120 may present the startup interface for image generation in response to detecting the trigger operation for the startup interface entry in the avatar information interface. Such a preset operation may also include, for example, a trigger operation for a specified operation control in a content capturing interface.

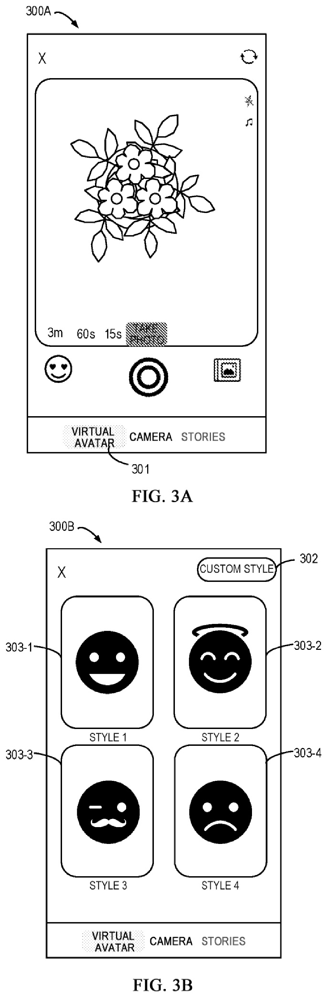

Some example embodiments are described by an example of using the style as the element and an example of the stylized image generation as the element-specific image generation. However, it should be understood that the embodiments described with reference to the "style" are applicable to other types of elements. FIG. 3A shows an example of a content capturing interface (that is, an example 300A). An interface shown in the example 300A includes a first startup interface entry 301. The terminal device 120 may switch to presenting a startup interface for stylized image generation in response to detecting a trigger operation for the first startup interface entry 301.

FIG. 3B shows an example (that is, an example 300B) of a startup interface for stylized image generation. As shown in FIG. 3B, the interface shown in the example 300B includes image generation entries (for example, an entry 303-1, an entry 303-2, an entry 303-3, an entry 303-4, etc.) for a plurality of styles respectively. It should be noted that in some embodiments, at least some of the plurality of styles in the startup interface are preset styles. The preset style may be a style that may be provided by default by the application 120. The terminal device 120 may obtain a first image of a first virtual avatar having a first style in response to detecting a trigger for an image generation entry for a first style of the plurality of styles (which may be understood that the first style may be any of the plurality of styles). The first virtual avatar described here is a virtual avatar associated with the user who triggers the entry. In some embodiments, the first style may be any of a plurality of preset styles. Illustratively, the terminal device 120 may obtain an image of the first virtual avatar having a style 2 in response to detecting a trigger operation for the entry 303-2. It may be understood that the first image here may be generated locally by the terminal device 120, or may be generated by means of the server 130 and obtained by the terminal device 120 from the server 130. For the convenience of description, the following uses an example in which the first image is generated locally by the terminal device 120 for illustrative description. Illustratively, in order to generate the first image, a machine learning model may be used and it may be generated based on configuration information of the first virtual avatar and the first style.

In some embodiments, in response to receiving a trigger operation for the image generation entry for the first style in the startup interface, the terminal device 120 may also determine whether an image of the first virtual avatar having the first style has been previously generated and/or whether the image of the first virtual avatar having the first style is currently being generated.

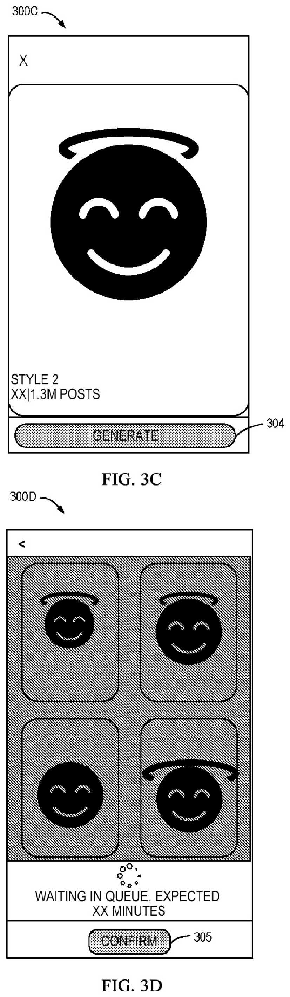

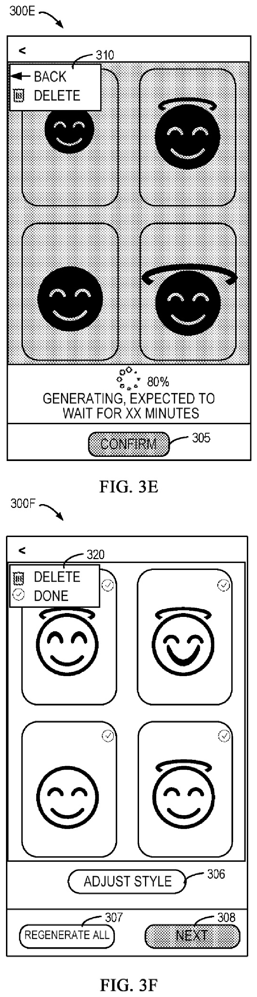

In the case where no image of the first virtual avatar having the first style has been previously generated and the image of the first virtual avatar having the first style is not currently being obtained, the terminal device 120 may present an interface as shown in an example 300C of FIG. 3C. The interface shown in the example 300C includes a generation control 304. The terminal device 120 may start to generate the first image in response to receiving a trigger operation for the generation control 304. The terminal device 120 may present a generation progress interface for indicating an image generation progress, for example, in response to receiving the trigger operation for the generation control 304, as shown in an example 300D of FIG. 3D (that is, the terminal device 120 may present the example 300D in the case where the first image has just begun to be generated). The terminal device 120 may also update the generation progress interface during a generation process of the first image, as shown in an example 300E of FIG. 3E. The example 300D and the example 300E show a plurality of examples of the generation progress interface of the first image. In some embodiments, the terminal device 120 may also present a card 310 in response to a preset operation (for example, a long press operation on the creation progress interface). The terminal device 120 may switch to presenting other interfaces that may be provided by the application 120, for example, in response to receiving a trigger operation for a return control in the card 310 or in response to receiving a trigger operation for a determination control (for example, a control 305) in the generation progress interface. Illustratively, the terminal device 120 may switch to presenting a content recommendation interface of the application 120 in response to detecting a trigger operation for the control 305.

In response to the first image being generated, the terminal device 120 may provide an example 300F shown in FIG. 3F. The example 300F may be an example of a first content preview interface. As shown in FIG. 3F, the terminal device 120 may present the first image in the first content preview interface. The first image may be one of a plurality of images. The terminal device 120 may determine that an editing operation for one or more images of the plurality of images is received and present the card 320, for example, in response to receiving a selection operation for the one or more images. The terminal device 120 may delete the selected one or more images, for example, in response to receiving a trigger operation for a deletion control in the card 320. The terminal device 120 may determine that the editing operation for the selected one or more images is completed and cancel presenting the card 320, for example, in response to receiving a trigger operation for a completion control in the card 320.

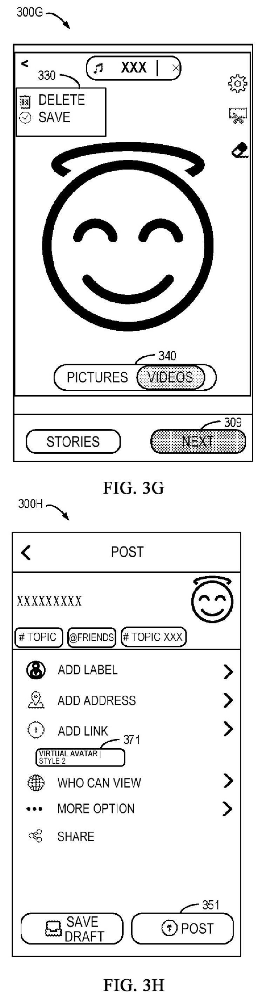

The content preview interface shown in the example 300F also includes an operation control 307 and an operation control 308. The terminal device 120 may trigger regeneration of all the first images in the example 300F, for example, in response to receiving a trigger operation for the operation control 307. The terminal device 120 may switch to presenting an example 300G shown in FIG. 3G, for example, in response to receiving a trigger operation for the operation control 308. The example 300G shows an example of a content editing interface of the first image. The example 300G presents a card 330. The terminal device 120 may delete the generated first image in response to receiving a trigger operation for the deletion control in the card 330. The terminal device 120 may save the first image in response to receiving a trigger operation for a save control in the card 330.

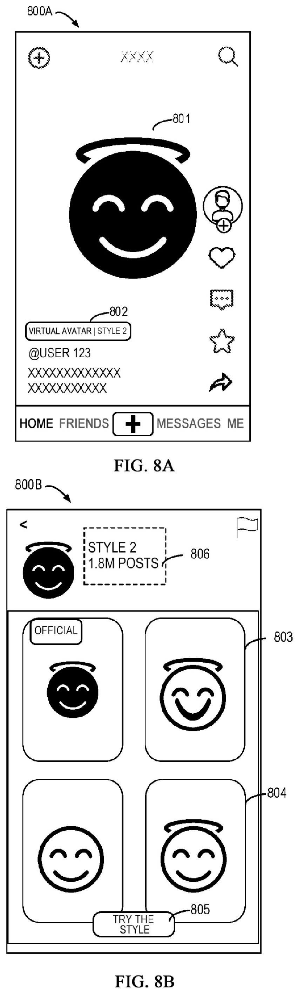

The example 300G also includes an option for a posting format of the first image. For example, the example 300G may include an operation control 340. The operation control 340 includes an option "picture" and an option "video". The terminal device 120 may determine to post the first image in a picture format in response to receiving a trigger operation for the option "picture". The terminal device 120 may determine to post the first image in a video format in response to receiving a trigger operation for the option "video". The example 300G may also include an operation control 309. The terminal device 120 may determine that an editing confirmation is received (that is, the editing of the first image is completed) in response to receiving a trigger operation for the operation control 309, and switch to presenting a content posting interface for the first image. FIG. 3H shows an example (that is, an example 300H) of the content posting interface for the first image. The example 300H includes a posting control 351, and the terminal device 120 may determine that a posting confirmation is received and post the first image in response to receiving a trigger operation for the posting control 351. In some embodiments, the content posting interface shown in the example 300H may also include a style use entry 371 for the first style (the style 2 in this example). After the first image is posted, the style use entry 371 may be presented with the first image, as described below with reference to FIG. 8A.

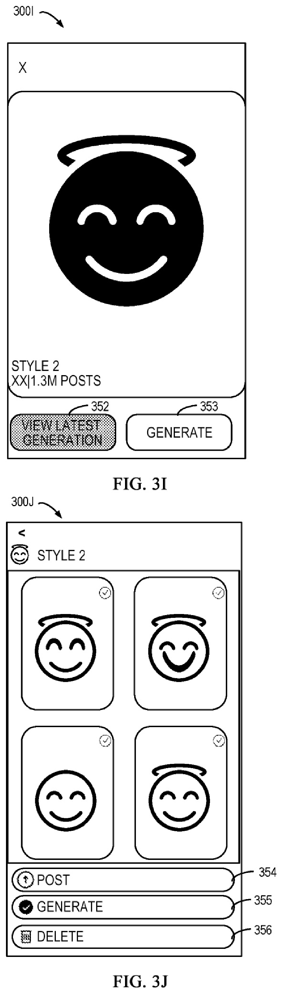

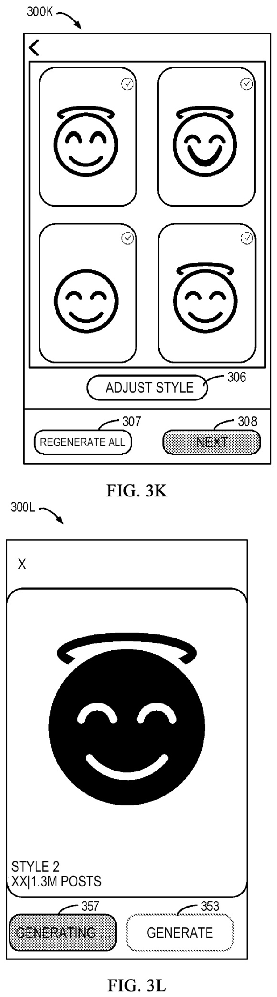

In some embodiments, in the case where an image of the first virtual avatar having the first style has been previously generated and the image of the first virtual avatar having the first style is not currently being generated, the terminal device 120 may present an example 300I shown in FIG. 3I. The interface shown in the example 300I includes a viewing control 352 and a generation control 353. The generation control 353 here has a similar function to the generation control 304 in the example 300C. The terminal device 120 may determine whether the previously generated first image has been posted in response to receiving a trigger operation for the viewing control 352. If the previously generated first image has not been posted, the terminal device 120 may switch to presenting an example 300J shown in FIG. 3J. The interface shown in the example 300J includes the previously generated first image of the first virtual avatar having the first style. The interface shown in the example 300J includes a posting control 354, a generation control 355, and a deletion control 356. The terminal device 120 may post the previously generated first image in response to receiving a trigger operation for the posting control 354. The terminal device 120 may continue to generate the first image of this time in response to receiving a trigger operation for the generation control 355. The terminal device 120 may delete the previously generated first image in response to receiving a trigger operation for the deletion control 356. If the previously generated first image has been posted, the terminal device 120 may switch to presenting an example 300K shown in FIG. 3K. The content preview interface shown in the example 300K may include the previously generated first image. The interface shown in the example 300K may also include an operation control 307 and an operation control 308. The operation control 307 and the operation control 308 will not be repeated here.

In some embodiments, in the case where the first image of the first virtual avatar having the first style is currently being obtained, the terminal device 120 may present an example 300L shown in FIG. 3L. The example 300L includes an operation control 357 and a generation control 353. Since the first image is currently being generated, the generation control 353 may be in a non-selectable state. The terminal device 120 may present prompt information indicating that the generation control 353 is not selectable in the example 300L in any appropriate manner (including but not limited to a pop-up window, a card, etc.) in response to detecting a trigger operation for the generation control 353. The terminal device 120 may present a creation progress interface of the first image, for example, in response to detecting a trigger operation for the operation control 357.

### Example Interface for Adjusting Image Element

In some embodiments, the user may be supported to adjust the image element, and an image of the virtual avatar having the adjusted element may be generated. The terminal device 120 may present an element adjustment interface in response to an element adjustment request for a first image of a first virtual avatar having a first element. The terminal device 120 may receive adjustment information for the first element via the element adjustment interface, and present a second image of the first virtual avatar having the adjusted first element based on the received adjustment information. That is, if the user is not satisfied with the generated first image or has his/her own preferences, the user may adjust the first element, and generate the second image of the first virtual avatar having the adjusted first element based on the adjusted first element. In some embodiments, if the first element is a preset element, the first element may be regarded as a parent element, and the adjusted first element may be regarded as a child element of the parent element.

The example embodiment of adjusting the image element is described by continuing to use the style as an example, but it should be understood that the embodiment described with reference to the style is applicable to other elements. In some embodiments, the user may be supported to adjust the style, and the image of the virtual avatar having the adjusted style may be generated. Illustratively, the terminal device 120 may present the style adjustment interface in response to the style adjustment request for the first image of the first virtual avatar having the first style. The terminal device 120 may receive the adjustment information for the first style via the style adjustment interface, and present the second image of the first virtual avatar having the adjusted first style based on the received adjustment information. That is, if the user is not satisfied with the generated first image or has his/her own preferences, the user may adjust the first style, and generate the second image of the first virtual avatar having the adjusted first style based on the adjusted first style. In some embodiments, if the first style is a preset style, the first style may be regarded as a parent style, and the adjusted first style may be regarded as a child style of the parent style.

In some embodiments, the first content preview interface described above (for example, the example 300F and the example 300K shown in FIG. 3F and FIG. 3K) may include a style adjustment entry (for example, an entry 306). The terminal device 120 may determine that the style adjustment request for the first image of the first virtual avatar having the first style is received in response to detecting a trigger operation for the style adjustment entry. The terminal device 120 may present the style adjustment interface in response to the style adjustment request for the first image. The style adjustment interface may include, for example, at least one of a first input control (for example, a text input box, a voice input control, etc.) for receiving the adjustment information, first prompt information for the adjustment information, or the first image. The first prompt information indicates an adjustable part of the first style.

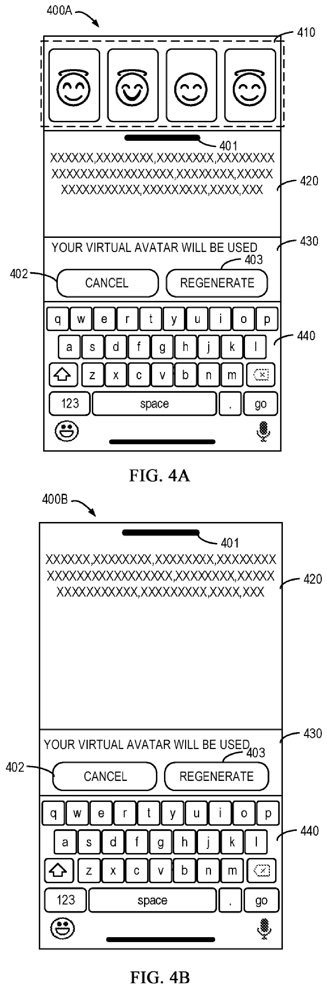

FIG. 4A shows an example of the style adjustment interface (that is, an example 400A). As shown in FIG. 4A, the example 400A may include a first image 410. The terminal device 120 may present the first image 410 to enable the user to adjust configuration information of the first style against the first image 410. Therefore, it may be convenient for the user to adjust the style intuitively. The example 400A may also include a first input control 420, an area 430, and an input panel 440. The user may input the adjustment information for the first style through the first input control 420. Alternatively, at least a part of current configuration information of the first style may be presented in the first input control 420. The user may modify the configuration information displayed in the first input control 420.

In some embodiments, the terminal device 120 may also cease displaying the first image in the style adjustment interface in response to receiving a preset operation for the style adjustment interface. That is, the first image is not displayed in the style adjustment interface. In addition, the terminal device 120 may increase a presentation area of the first input control. As shown in FIGS. 4A and 4B, the terminal device 120 may present an interface shown in an example 400B, for example, in response to receiving an upward drag operation for an operation control 401 in the example 400A. The first image 410 is no longer presented in the example 400B, and the presentation area of the first input control 420 in the example 400B is larger than the presentation area of the first input control 420 in the example 400A.

The area 430 may include a cancel control 402 and a regeneration control 403. The terminal device 120 may obtain the adjustment information input by the user via the input panel 440. The terminal device 120 may determine to cancel the adjustment of the configuration information of the first style in response to receiving a trigger operation for the cancel control 402. The terminal device 120 may return to presenting the first content preview interface, for example. The terminal device 120 may also determine the adjusted first style based on the configuration information of the adjusted first style and obtain the second image of the first virtual avatar having the adjusted first style in response to detecting a trigger operation for the regeneration control 403. In some embodiments, the terminal device 120 may generate the second image by using a target model. For example, a prompt may be generated based on the configuration information of the adjusted first style, and the prompt may be provided to the target model. For another example, the configuration information of the adjusted first style and the first virtual avatar may be provided to the target model as an image generation condition. The embodiments of the present disclosure are not limited in this regard.

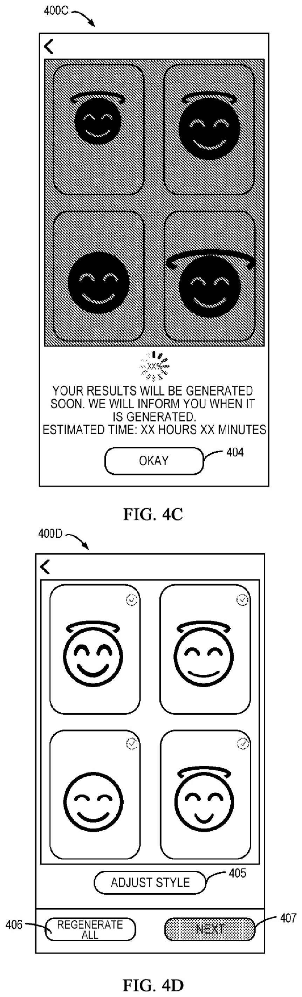

The terminal device 120 may start to obtain the second image, for example, in response to receiving the trigger operation for the regeneration control 403. The terminal device 120 may present an example 400C shown in FIG. 4C, for example. The example 400C is an example of the creation progress interface of the second image. Before obtaining the second image, the terminal device 120 may present indication information regarding a generation progress of the second image, for example, based on the generation progress of the second image. For example, the terminal device 120 may present the text "XX%" and the text "Estimated time: XX hours XX minutes" in the interface shown in the example 400C. The terminal device 120 may switch to presenting other interfaces that may be provided by the application 120, for example, in response to receiving a trigger operation for a determination control (for example, a control 404) in the example 400C. Illustratively, the terminal device 120 may switch to presenting a content recommendation interface of the application 120 in response to detecting a trigger operation for the control 305.

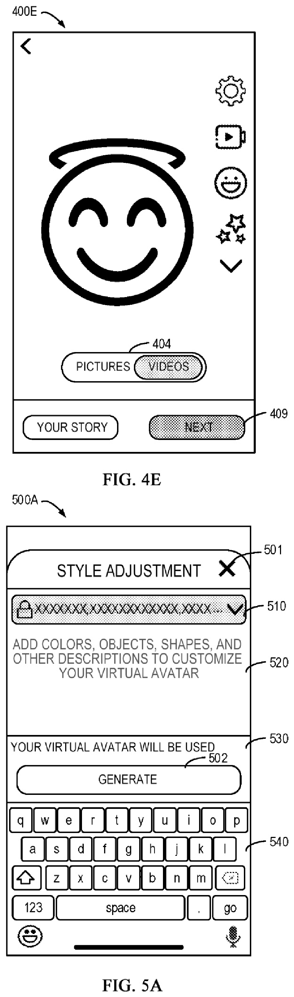

In response to the second image being generated, the terminal device 120 may provide an example 400D shown in FIG. 4D. The example 400D may be an example of a second content preview interface for the second image. As shown in FIG. 4D, the terminal device 120 may present the second image in the example 400D. In this example, a plurality of second images is presented. The second content preview interface may include a style adjustment entry (for example, an entry 405). The terminal device 120 may determine that a style adjustment request for the second image of the first virtual avatar having the adjusted first style is received in response to detecting a trigger operation for the style adjustment entry. That is, the user may further adjust the adjusted first style. The example 400D also includes an operation control 406 and an operation control 407. The terminal device 120 may re-generate all second images in the example 400D, for example, in response to receiving a trigger operation for the operation control 406. The terminal device 120 may switch to presenting an example 400E shown in FIG. 4E, for example, in response to receiving a trigger operation for the operation control 407.

The example 400E is an example of a content editing interface of the second image. The interface shown in the example 400E includes an option for a posting format of the second image. For example, an operation control 404 is shown in the example 400E. The operation control 404 includes an option "picture" and an option "video". The terminal device 120 may determine to post the second image in a picture format in response to receiving a trigger operation for the option "picture". The terminal device 120 may determine to post the second image in a video format in response to receiving a trigger operation for the option "video". The example 400E may also include an operation control 409. The terminal device 120 may determine that an editing confirmation is received (that is, the editing of the second image is completed) in response to a trigger operation for the operation control 409, and switch to presenting a content posting interface for the second image. The terminal device 120 may receive a posting confirmation via the content posting interface for the second image. The terminal device 120 may then post the second image in response to receiving the posting confirmation. The content posting interface of the second image is similar to the content posting interface of the first image described above, and will not be repeated here.

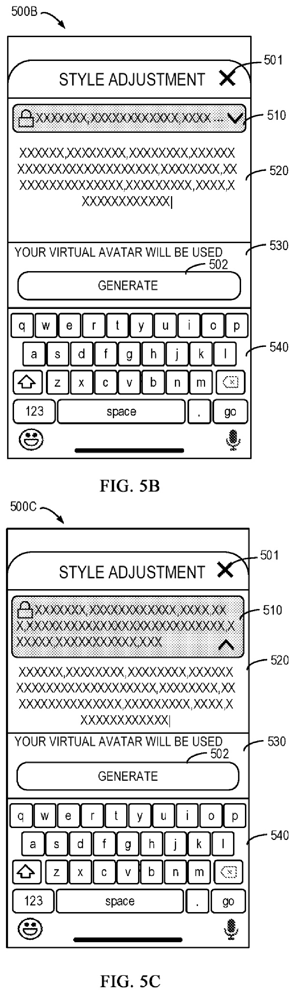

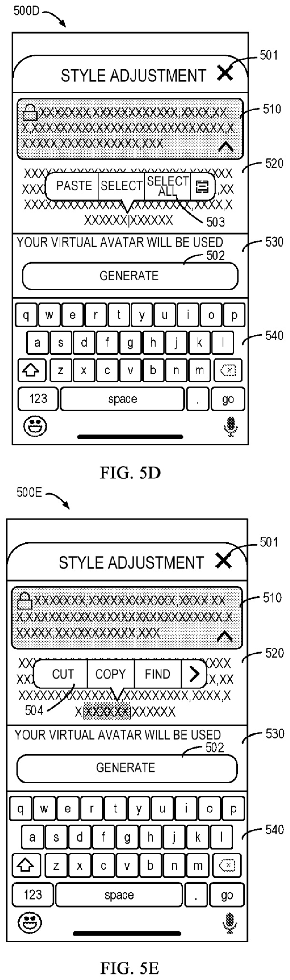

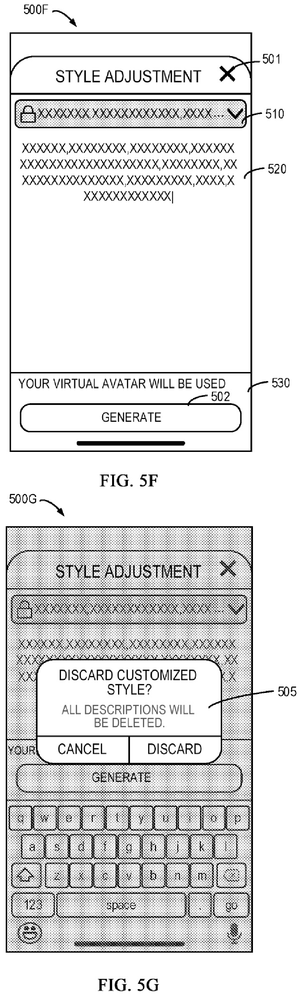

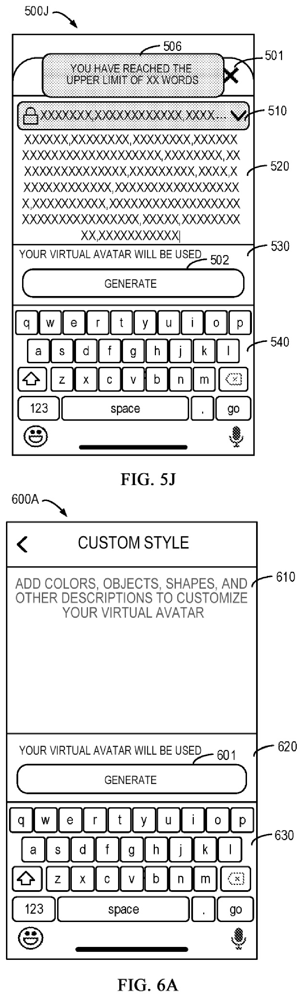

The example of adjusting the configuration information of the first style and obtaining the second image based on the adjusted configuration information is described above. The following describes a plurality of examples (that is, examples 500A to 500J) of the style adjustment interface in detail with reference to FIGS. 5A to 5J.

The terminal device 120 may present the style adjustment interface shown in the example 500A, for example, in response to receiving a trigger operation for the style adjustment entry (for example, the entry 306) in the first content preview interface (for example, the example 300F and the example 300K shown in FIGS. 3F and 3K). As shown in FIG. 5A, the example 500A may include an area 510. The area 510 may display at least a part of the fixed configuration information of the first style. It should be noted that in the case where the first style includes the fixed configuration information, the terminal device 120 may generate a prompt based on the fixed configuration information and the adjustment information for the first style. The terminal device 120 may provide the prompt to a model for generating the image (that is, the target model). The terminal device 120 may obtain the output of the target model and obtain the second image based on the output.

The example 500A may also include a first input control 520, an area 530, and an input panel 540. The terminal device 120 may obtain adjustment information input by the user via the input panel 540. In some embodiments, first prompt information for the adjustment information may be presented in the first input control 520. The first prompt information here indicates an adjustable part of the first style. The first prompt information here may be, for example, the text "Add colors, objects, shapes, and other descriptions to customize your virtual avatar" shown in the example 500A.

The example 500A also includes a cancel control 501. The terminal device 120 may determine to cancel the adjustment of the configuration information of the first style in response to receiving a trigger operation for the cancel control 501. The terminal device 120 may return to presenting a first content preview interface, for example. The area 530 may include a generation control 502. The terminal device 120 may also determine the adjusted first style based on the received adjustment information and fixed configuration information and obtain the second image of the first virtual avatar having the adjusted first style in response to detecting a trigger operation for the generation control 502. The terminal device 120 may start to obtain the second image, for example, in response to receiving the trigger operation for the generation control 502.

As shown in FIG. 5B, the terminal device 120 may present the obtained adjustment information in the first input control 520 in the example 500B. The terminal device 120 may also present all the fixed configuration information of the first style, for example, in response to receiving a trigger operation for the control 510. Illustratively, the terminal device 120 may present an interface shown in the example 500C in response to receiving the trigger operation for the control 510 in the example 500B. The control 510 in the example 500C includes all the fixed configuration information of the first style.

In the case where the adjustment information is obtained via the first input control 520, the terminal device 120 may also determine a position of an input indicator in the first input control 520. The input indicator here may be, for example, a symbol "|" in the first input control 520 in FIG. 5B. The terminal device 120 may present a menu 503 shown in the example 500D in response to the input indicator being located inside the adjustment information. The menu 503 may include a plurality of operation options for the adjustment information, such as an option "paste", an option "select", and an option "select all". The terminal device 120 may also present a menu 504 shown in the example 500E, for example, in response to determining that part of the adjustment information is selected. The menu 504 may include a plurality of operation options for the selected part of the adjustment information, such as an option "cut", an option "copy", and an option "find".

The terminal device 120 may also present an interface shown in the example 500F, for example, in response to receiving a preset operation (for example, a cancel presentation operation for the input panel 540) for the style adjustment interface (for example, the example 500B). The input panel 540 is no longer presented in the example 500F, and a presentation area of the first input control 520 is increased. The terminal device 120 may also present an interface shown in the example 500G, for example, in response to receiving a preset operation (for example, a deletion operation) for the first input control 520. The interface of the example 500G includes a card 505. The card 505 includes prompt information prompting to confirm whether to delete the adjustment information. The card 505 also includes a cancel control and a discard control. The terminal device 120 may cancel deleting the adjustment information in response to receiving a trigger operation for the cancel control in the card 505. The terminal device 120 may delete the received adjustment information presented in the first input control 520 in response to receiving a trigger operation for the discard control in the card 505.

In some embodiments, the terminal device 120 may also verify the received adjustment information in response to an image generation request associated with the adjustment information, that is, determine whether the adjustment information satisfies a preset condition. The preset condition may relate to any suitable attribute related to the adjustment information, for example, whether the grammar of the text is correct, whether the wording is appropriate, whether the number of words is less than a threshold, and the like. For example, in response to receiving the trigger operation for the generation control 502, the terminal device 120 may determine that the image generation request is received, and verify the received adjustment information. In the process of verifying the adjustment information, the terminal device 120 may present an interface shown in the example 500H, for example. In the example 500H, the terminal device 120 may present prompt information indicating that the verification is currently performed in the generation control 502. The terminal device 120 may indicate that the verification is currently performed, for example, by presenting a specific interface element.

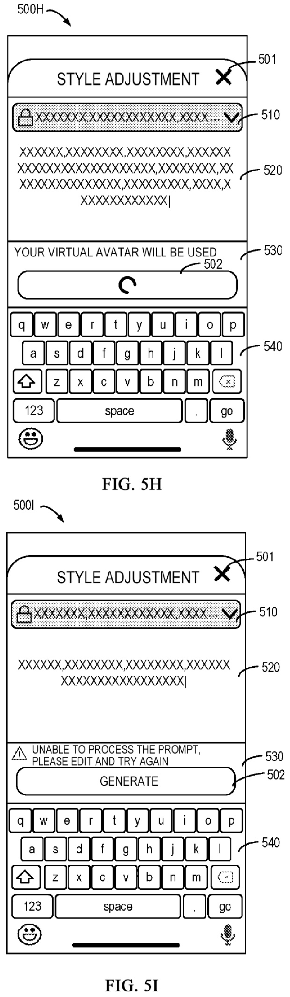

If the adjustment information satisfies a preset condition, that is, the adjustment information passes the verification, the terminal device 120 may obtain the second image based on the adjustment information and the fixed configuration information. If the adjustment information does not satisfy the preset condition, that is, the adjustment information fails to pass the verification, the terminal device 120 may present corresponding prompt information to indicate that the adjustment information fails to pass the verification. As shown in FIG. 5I, if the adjustment information fails to pass the verification, the terminal device 120 may present the example 500I. The terminal device 120 may present prompt information "Unable to process the prompt, please edit and try again" in the area 530 in the example 500I to prompt the user that the adjustment information fails to pass the verification.

In some embodiments, the terminal device 120 may also directly verify the adjustment information by default in response to receiving the adjustment information. As shown in FIG. 5H, if the adjustment information fails to pass the verification, the terminal device 120 may also present the example 500H. The terminal device 120 may present a pop-up window 506 in the example 500H. The terminal device 120 may present prompt information "You have reached the upper limit of XX words" in the pop-up window, for example, to prompt the user that the adjustment information fails to pass the verification.

By verifying the adjustment information input by the user, the effectiveness of the adjustment may be ensured. This facilitates the user to adjust the style conveniently.

In such an embodiment, the user may adjust an existing style to obtain a style that satisfies the user's preference. In this way, the threshold for using the style is reduced, and the diversity of the style is also ensured.

### Example Interface for Customizing Image Element

In some embodiments, the user may be supported to customize a new element, which is not limited to the preset element provided by the application 120. For example, the terminal device 120 may present an element customization interface in response to an element customization request. The terminal device 120 may receive customization information for the new element (also referred to as a second element) via the element customization interface, and present a third image of the first virtual avatar based on the received customization information, where the third image of the first virtual avatar has the second element. The customization information may be configuration information of the second element or at least partial definition of the second element. That is, the user may customize a new element by the user him/herself, and generate the third image of the first virtual avatar based on the second element, where the third image of the first virtual avatar has the second element. In some embodiments, such a customized second element may be regarded as a parent element. In addition, the adjustment of the second element may also be supported. The adjusted second element may be regarded as a child style.

The example embodiment of customizing the image element is described by continuing to use the style as an example, but it should be understood that the embodiment described with reference to the style is applicable to other elements. In some embodiments, the user may be supported to customize a new style, which is not limited to the preset style provided by the application 120. For example, the terminal device 120 may present a style customization interface in response to a style customization request. The terminal device 120 may receive customization information for the new style (also referred to as a second style) via the style customization interface, and present a third image of the first virtual avatar having the second style based on the received customization information. The customization information may be configuration information of the second style or at least partial definition of the second style. That is, the user may customize a new style by the user him/herself, and generate the third image of the first virtual avatar having the second style based on the second style. In some embodiments, such a customized second style may be regarded as a parent style. In addition, the adjustment of the second style may also be supported. The adjusted second style may be regarded as a child style.

In some embodiments, the startup interface for stylized image generation (for example, the example 300B shown in FIG. 3B) mentioned above may include a style customization entry (for example, an entry 302). The terminal device 120 may determine that the style customization request is received in response to detecting a trigger operation for the style customization entry. The terminal device 120 may present the style customization interface in response to the style customization request. The style customization interface may include, for example, a second input control (for example, a text input box, a voice input control, etc.) for receiving the customization information and/or second prompt information for the customization information. The second prompt information indicates a customizable element.

FIG. 6A is an example of a style customization interface (that is, an example 600A). As shown in FIG. 6A, an interface shown in the example 600A may include a second input control 610, an area 620, and an input panel 630. In some embodiments, the second prompt information for the customization information may be presented in the second input control 610 to indicate to the user the style configuration information that may be input by the user. The second prompt information here may be, for example, the text "Add colors, objects, shapes, and other descriptions to customize your virtual avatar" shown in the example 600A.

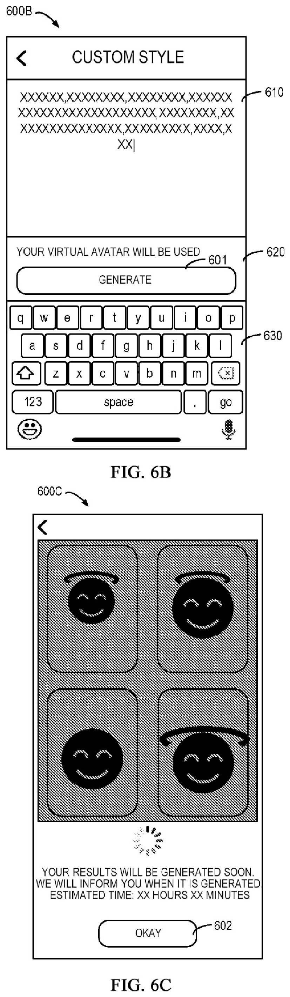

The area 620 may include a generation control 601. The terminal device 120 may obtain customization information input by the user via the input panel 630. As shown in FIG. 6B, the terminal device 120 may present the obtained customization information in the second input control 610 in an example 600B.

The terminal device 120 may also determine a second style based on the received customization information and obtain a third image of the first virtual avatar having the second style in response to detecting a trigger operation for the generation control 601. In some embodiments, the terminal device 120 may generate the third image by using the target model. For example, a prompt may be generated based on the customization information, and the prompt may be provided to the target model. For another example, the customization information and the first virtual avatar may be provided to the target model as an image generation condition, and the target model generates the third image accordingly.

The terminal device 120 may start to obtain the third image, for example, in response to receiving the trigger operation for the generation control 601. The terminal device 120 may present an example 600C shown in FIG. 6C, for example. The example 600C shows an example of the creation progress interface of the third image. Before obtaining the third image, the terminal device 120 may present indication information regarding the generation progress of the third image, for example, based on the generation progress of the third image. For example, the terminal device 120 may present the indication information regarding the generation progress of the third image by presenting the text "Estimated time: XX hours XX minutes" in the example 600C. The terminal device 120 may switch to presenting other interfaces that may be provided by the application 120, for example, in response to receiving a trigger operation for a determination control (for example, a control 602) in the example 600C. Illustratively, the terminal device 120 may switch to presenting a content recommendation interface of the application 120 in response to detecting the trigger operation for the control 602.

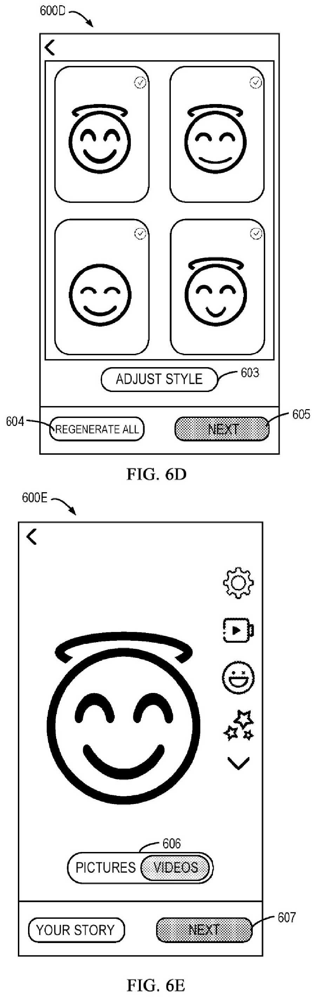

In response to the third image being generated, the terminal device 120 may provide an example 600D shown in FIG. 6D. The example 600D may be an example of a third content preview interface corresponding to the third image. As shown in FIG. 6D, the terminal device 120 may present the third image in the example 600D. The third image may also include a plurality of images. The example 600D may include a style adjustment entry (for example, an entry 605). The terminal device 120 may determine that a style adjustment request for the third image of the first virtual avatar having the second style is received in response to detecting a trigger operation for the style adjustment entry. The example 600D also includes an operation control 604 and an operation control 605. The terminal device 120 may re-generate all the third images in the example 600D, for example, in response to receiving a trigger operation for the operation control 604. The terminal device 120 may switch to presenting an example 600E shown in FIG. 6E, for example, in response to receiving a trigger operation for the operation control 605.

The example 600E shows an example of the content editing interface of the third image. The example 600E includes an option for a posting format of the third image. For example, the example 600E may include an operation control 606. The operation control 606 includes an option "picture" and an option "video". The terminal device 120 may determine to post the third image in a picture format in response to receiving a trigger operation for the option "picture". The terminal device 120 may determine to post the third image in a video format in response to receiving a trigger operation for the option "video". The example 600E may also include an operation control 607. The terminal device 120 may determine that the editing confirmation is received (that is, the editing of the third image is completed) in response to receiving a trigger operation for the operation control 607, and switch to presenting the content posting interface for the third image. The terminal device 120 may receive a posting confirmation via the content posting interface for the third image. The terminal device 120 may then post the third image in response to receiving the posting confirmation. The content posting interface for the third image is similar to the content posting interface of the first image described above, and will not be repeated here.

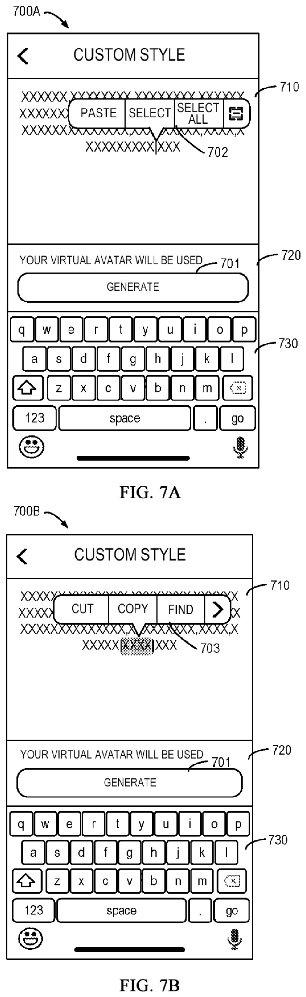

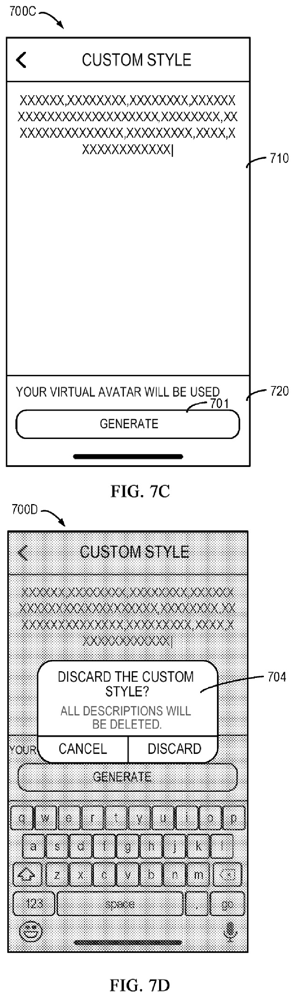

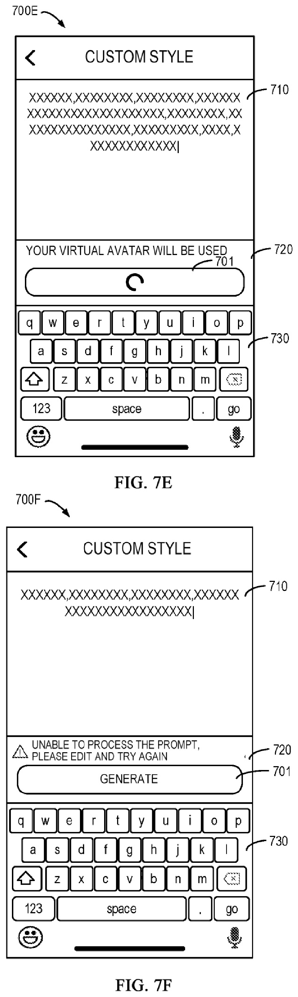

The example of obtaining the customization information of the second style and obtaining the third image based on the customization information is described above. The following describes a plurality of examples (that is, examples 700A to 700G) of the style adjustment interface in detail with reference to FIGS. 7A to 7G. A second input control 710 in the examples 700A to 700G may correspond to the second input control 610 in the examples 600A and 600B, an area 720 and a generation control 701 may correspond to the area 620 and the generation control 601, and an input panel 730 may correspond to the input panel 630.

In the case where the customization information is obtained via the second input control 710, the terminal device 120 may also determine a position of the input indicator in the second input control 710. The input indicator here may be, for example, a symbol "|" in the second input control 710. The terminal device 120 may present a menu 702 shown in the example 700A in response to the input indicator being located inside the adjustment information. The menu 702 may include a plurality of operation options for the customization information, such as an option "paste", an option "select", and an option "select all". The terminal device 120 may also present a menu 703 shown in the example 700B, for example, in response to determining that part of the adjustment information is selected. The menu 703 may include a plurality of operation options for the selected part of the customization information, such as an option "cut", an option "copy", and an option "find".

The terminal device 120 may also present the example 700C, for example, in response to receiving a preset operation (for example, a cancel presentation operation for the input panel 730) for the style customization interface. In the example 700C, presentation of the input panel 730 is cancelled, and a presentation area of the second input control 710 is increased. The terminal device 120 may also present the example 700D, for example, in response to receiving a preset operation (for example, a deletion operation) for the second input control 710. The example 700D includes a card 704. The card 704 includes prompt information prompting to confirm whether to delete the customization information. The card 704 also includes a cancel control and a discard control. The terminal device 120 may cancel deleting the customization information in response to receiving a trigger operation for the cancel control in the card 704. The terminal device 120 may delete the received customization information presented in the second input control 710 in response to receiving a trigger operation for the discard control in the card 704.

In some embodiments, the terminal device 120 may also verify the received customization information in response to an image generation request associated with the customization information, that is, determine whether the received customization information satisfies a preset condition. The preset condition may involve any suitable attribute related to the customization information, for example, whether the grammar of the text is correct, whether the wording is appropriate, whether the number of words is less than a threshold, and the like. The terminal device 120 may determine that the image generation request is received, for example, in response to receiving a trigger operation for the generation control 701, and verify the received customization information. In the process of verifying the customization information, the terminal device 120 may present the example 700E, for example. In the example 700E, the terminal device 120 may present prompt information indicating that the verification is currently performed in the generation control 701. The terminal device 120 may indicate that the verification is currently performed, for example, by presenting a specific element.

If the customization information satisfies the preset condition, that is, the customization information passes the verification, the terminal device 120 may obtain a third image based on the customization information. If the customization information does not satisfy the preset condition, that is, the customization information fails to pass the verification, the terminal device 120 may present corresponding prompt information to indicate that the customization information fails to pass the verification. As shown in FIG. 7F, if the adjustment information fails to pass the verification, the terminal device 120 may present the example 700F. The terminal device 120 may present the prompt information "Unable to process the prompt, please edit and try again" in the area 720 in the example 700F to prompt the user that the customization information fails to pass the verification.

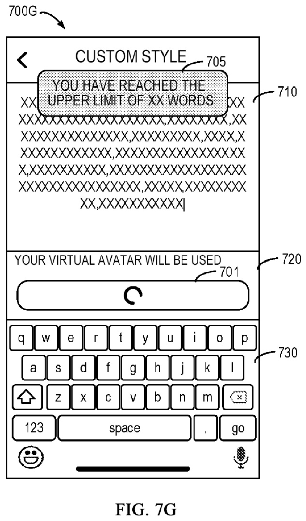

In some embodiments, the terminal device 120 may also directly verify customization information by default in response to receiving the customization information. As shown in FIG. 7G, if the adjustment information fails to pass the verification, the terminal device 120 may also present the example 700G. The terminal device 120 may present a pop-up window 705 in the example 700G. The terminal device 120 may present prompt information "You have reached the upper limit of XX words" in the pop-up window, for example, to prompt the user that the customization information fails to pass the verification.

Through the above example, in the embodiments of the present disclosure, the user may be provided with a plurality of different styles for the stylized image generation. At the same time, the user is supported to adjust the style to satisfy the user's preferences. This advantageously increases the flexibility of creation and the diversity of styles, thereby improving interactivity and interest. In addition, in some embodiments, the user is also further supported to customize the style. This further improves the flexibility of creation.

### Example Interface for Reusing Element

In some embodiments, if a user posts an image (which may be in the form of a picture or a video) having a certain element, other users may be supported to use this element to generate an image of a virtual avatar associated with the other users. Such example embodiments are described below. For the purpose of description only, it is assumed that a first user is associated with a first virtual avatar of a first object, for example, the first object may be the first user; and a second user different from the first user is associated with a second virtual avatar of a second object, for example, the second object may be the second user. The first user posts a fourth image of the first virtual avatar having a third element.

The example embodiment of reusing the element is described by continuing to use the style as an example, but it should be understood that the embodiment described with reference to the style is applicable to other elements. In some embodiments, if a user posts an image having a certain style (which may be in the form of a picture or a video), other users may be supported to use this style to generate an image of a virtual avatar associated with the other users. Such example embodiments are described below. For the purpose of description only, it is assumed that a first user is associated with a first virtual avatar of a first object, for example, the first object may be the first user; and a second user different from the first user is associated with a second virtual avatar of a second object, for example, the second object may be the second user. The first user posts a fourth image of the first virtual avatar having a third style.

The terminal device 120 of the second user may present the fourth image of the first virtual avatar having the third style and a style use entry of the third style. In some embodiments, the fourth image and the style use entry may be presented in a content recommendation interface. For example, when the second user browses an information flow (also called a feed) or browses the posted content of the followed user, the fourth image and the style use entry may be presented to the second user. Then, based on a trigger of the style use entry, the terminal device 120 may present a fifth image of the second virtual avatar having the third style. That is, if the user sees an image of a style that he/she likes, he/she may use this style to generate a new image.

In some embodiments, the third style may include a parent style and a child style obtained by partially adjusting the parent style. For example, the parent style may be a preset style in the application 125. For another example, the parent style may be a user-customized style, as described above. The child style may be generated through the style adjustment process described above.

In some embodiments, if the style use entry is triggered, the terminal device 120 may present a style information interface, for example, a style details page, of the third style. The style information interface may include a first image generation entry for the third style or a viewing entry for each of at least one image having the third style. Based on the operation associated with the style information interface, the terminal device 110 may obtain a fifth image of the second virtual avatar having the third style. That is, based on the operation associated with the style information interface, the second user may trigger to create an image with the same or similar style by the use of the virtual avatar associated with the second user him/herself.

Some example interfaces are described with reference to FIGS. 8A to 8I. FIG. 8A shows an example 800A of the content recommendation interface. The interface includes an image 801 of the first virtual avatar having a style 2 (which is an example of the third style) and a style use entry 802 for the style 2. If the style use entry 802 is triggered, the terminal device 120 may present an example 800B of FIG. 8B, which is an example of the style information interface. The example 800B shows the style information interface of the style 2. The style information interface includes basic information of the style, such as a name displayed in the area 806, the number of posted works, and the like.

The style information interface may include a first image generation entry for the third style, for example, a first image generation entry 805. In some embodiments, if the first image generation entry 805 is triggered, the terminal device 120 may obtain the fifth image. That is, the terminal device 120 may generate an image having the third style by using the second virtual avatar.

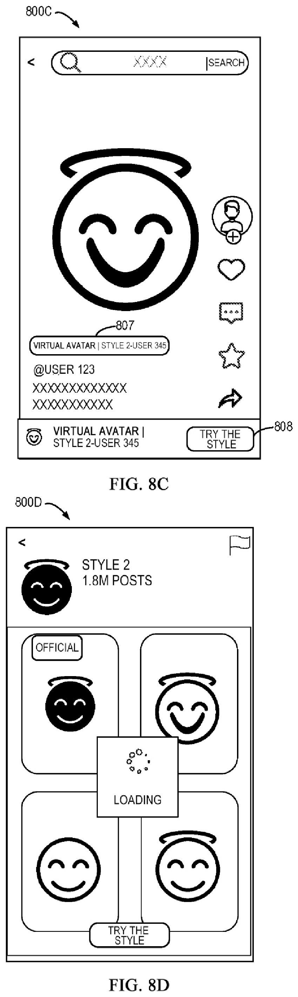

The style information interface may include a viewing entry for each of the at least one image having the third style, such as a viewing entry 803 and a viewing entry 804 shown in FIG. 8B. If a certain viewing entry is triggered, a viewing interface of a corresponding image may be presented, and the viewing interface may include a further image generation entry for the third style, which is also referred to as a second image generation entry. For example, if the viewing entry 803 is triggered, the terminal device 110 may present the image viewing interface shown in an example 800C of FIG. 8C. The image viewing interface includes a corresponding image, a style use entry 807, and a second image generation entry 808. If the second image generation entry 808 is triggered, the terminal device 120 may obtain the fifth image.

It should be noted that in some embodiments, if the third style is a parent style, the image corresponding to the viewing entry included in the style information interface may be an image having the parent style and/or an image having a child style under the parent style. For example, the style 2 is the parent style. The image in the style information interface shown in the example 800B may have the style 2 or a child style of the style 2. For example, the image corresponding to the viewing entry 803 has a child style "style 2 - user 345". The suffix "- user 345" in the style name may indicate that "user 345" adjusts the style 2 to obtain the child style. In this case, the style name displayed in the style use entry 807 is a name of the child style, as shown in FIG. 8C.

In some embodiments, if the third style is a child style, the image corresponding to the viewing entry included in the style information interface may be an image having the child style and/or an image of the child style having the parent style. In addition, the name of the child style is displayed in the area 806.

The generation of the stylized image is continuously described. If the first image generation entry 805 or the second image generation entry 808 is triggered, the terminal device 120 may trigger the generation of the fifth image. If the current second user does not have an associated virtual avatar, that is, if the second virtual avatar has not been created, the terminal device 120 may present an entry for creating the virtual avatar or an introduction interface about the virtual avatar. For example, the terminal device 120 may present the interface shown in FIG. 2A or FIG. 2B to guide the second user to create the associated second virtual avatar. In this case, if the creation of the second virtual avatar takes a long time, the fifth image of the second virtual avatar having the third style may be automatically generated after the creation of the second virtual avatar is completed, without re-operating by the second user. After the fifth image is generated, a notification or a prompt may be sent to the second user in various suitable ways to enable the second user to view the fifth image. Such a notification or a prompt may include, but is not limited to, a notification in the content recommendation interface, a message in an inbox, a system message in the terminal device 120, and the like.

In some embodiments, if the current second user has a created virtual avatar, the terminal device 110 may allow the second user to choose whether to use the created virtual avatar or re-create the virtual avatar and use the newly created virtual avatar. In some embodiments, if the current second user has a plurality of created virtual avatars, the terminal device 110 may allow the second user to choose the virtual avatar to be used from these created virtual avatars.

In some embodiments, if the current second user has the created second virtual avatar, the terminal device 110 may use the second virtual avatar to directly trigger the generation of the fifth image. For example, if the first image generation entry 805 is triggered, the terminal device 120 may present the interface shown in an example 800D of FIG. 8D, which indicates the trigger of the fifth image generation.

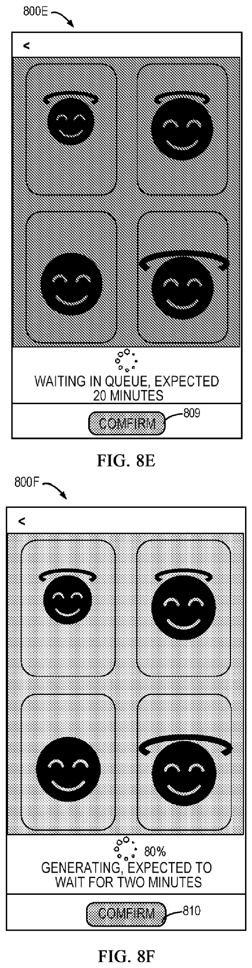

In some embodiments, in the process of generating the fifth image, the terminal device 120 may present a generation progress interface for indicating an image generation progress according to a generation progress of the fifth image, as shown in an example 800E shown in FIG. 8E and example 800F shown in FIG. 8F. The generation progress interface may also include a determination control, such as a control 809 in the example 800E and a control 810 in the example 800F. If a trigger operation for the determination control in the generation progress interface is received, the terminal device 120 may switch to presenting other interfaces that may be provided by the application 120. Illustratively, the terminal device 120 may switch to presenting the content recommendation interface of the application 120 in response to detecting a trigger operation for the control 809 or 810.

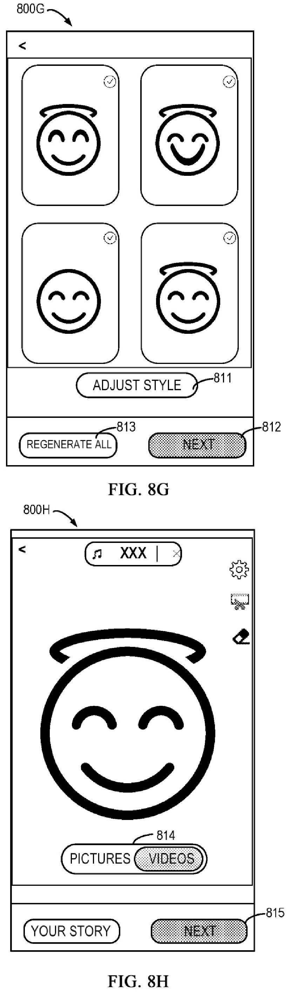

After the fifth image is generated or in response to a viewing operation of the second user, the terminal device 120 may present a content preview interface for the fifth image, for example, An example 800G in FIG. 8G is an example of the content preview interface. A content browsing interface may include a plurality of fifth images. Through the content browsing interface, the second user may further edit these images or may delete one or more of these images.

In some embodiments, based on the operation of the second user, the terminal device 120 may post the fifth image. The content preview interface shown in the example 800G also includes an operation control 813 and an operation control 812. The terminal device 120 may trigger to re-generate the fifth image, for example, in response to receiving a trigger operation for the operation control 813. The terminal device 120 may switch to presenting an example 800H shown in FIG. 8H, for example, in response to receiving a trigger operation for the operation control 812. The example 800H shows an example of a content editing interface of the fifth image.

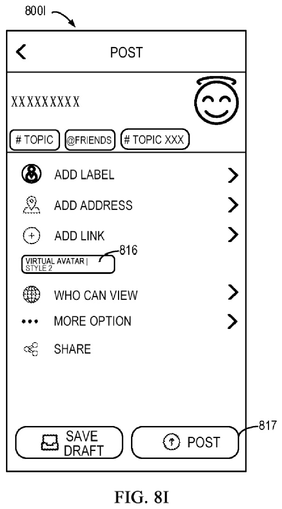

The content editing interface shown in the example 800H includes an option for a posting format of the fifth image. For example, the example 800H may include an operation control 814. The operation control 814 includes an option "picture" and an option "video". The terminal device 120 may determine to post the fifth image in a picture format in response to receiving a trigger operation for the option "picture". The terminal device 120 may determine to post the fifth image in a video format in response to receiving a trigger operation for the option "video". The content editing interface shown in the example 800H may also include an operation control 815. The terminal device 120 may determine that an editing confirmation is received (that is, the editing of the fifth image is completed) in response to receiving a trigger operation for the operation control 815, and switch to presenting the content posting interface for the fifth image. FIG. 8I shows an example (that is, an example 800I) of the content posting interface for the fifth image. The example 800I includes a posting control 817, and the terminal device 120 may determine that the posting confirmation is received and post the fifth image in response to receiving a trigger operation for the posting control 817. In some embodiments, the content posting interface shown in the example 800I may also include a style use entry 816 for the third style (the style 2 in this example). It should be understood that if a child style is used, the style use entry 816 presents a name of the child style, for example, "style 2 - user 345".

In some embodiments, the second user may be supported to adjust the style, and the image of the second virtual avatar having the adjusted third style may be generated. Illustratively, the terminal device 120 may present the style adjustment interface in response to a style adjustment request for the fifth image of the second virtual avatar having the third style. The terminal device 120 may receive adjustment information for the third style via the style adjustment interface, and present a sixth image of the second virtual avatar having the adjusted third style based on the received adjustment information. That is, if the second user is not satisfied with the generated fifth image or has his/her own preferences, the second user may adjust the third style, and generate the image having the adjusted third style of the second virtual avatar based on the adjusted third style.

In some embodiments, the content preview interface mentioned above may include the style adjustment entry. For example, the content preview interface shown in the example 800G may include an entry 811. The terminal device 120 may determine that a style adjustment request for the fifth image of the second virtual avatar having the third style is received in response to detecting a trigger operation for the style adjustment entry. The terminal device 120 may present the style adjustment interface in response to the style adjustment request for the fifth image.

The adjustment of the third style is similar to the adjustment of the first style described above, and thus is not repeated. It is noted that if the second user adjusts the third style, that is, generates a new child style, the style name displayed in the style use entry displayed after the image is posted may include relevant information of the second user. For example, the second user is "user 567" and adjusts the style 2. Accordingly, the style name displayed in the style use entry may be "style 2 - user 567".

In such embodiments, the existing style may be used through content posted by other users. This contributes to enhancing interactivity.

### Management of Element-Specific Image and Element

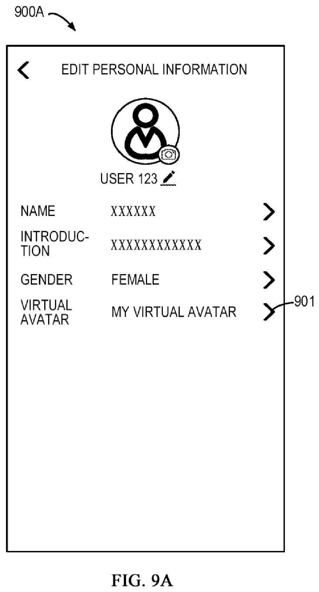

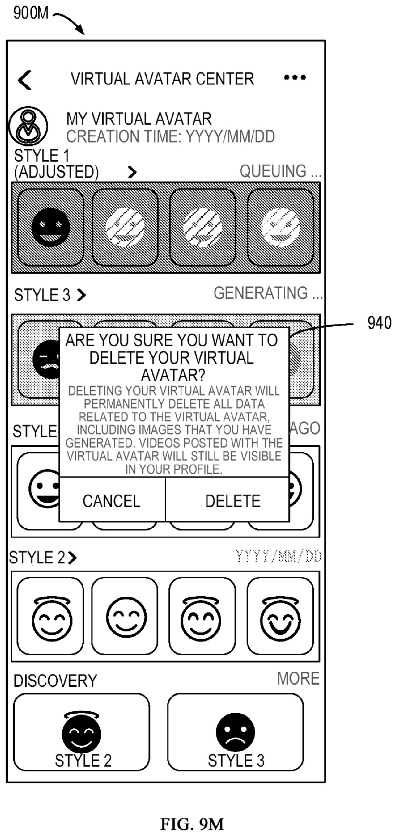

In some embodiments, an avatar information interface for the virtual avatar may be provided to manage images of different elements of the virtual avatar. The example embodiment of image and element management is described by continuing to use the style as an example, but it should be understood that the embodiment described with reference to the style is applicable to other elements. In some embodiments, the avatar information interface for the virtual avatar may be provided to manage images of different styles of the virtual avatar. As shown in FIG. 9A, the terminal device 120 may provide a user information interface of a user as shown in an example 900A. In the case where the user 110 (for example, "user 123" in the figure) has created a virtual avatar, the terminal device 120 may provide an entry 901 for the avatar information interface of the virtual avatar in the interface of the example 900A.

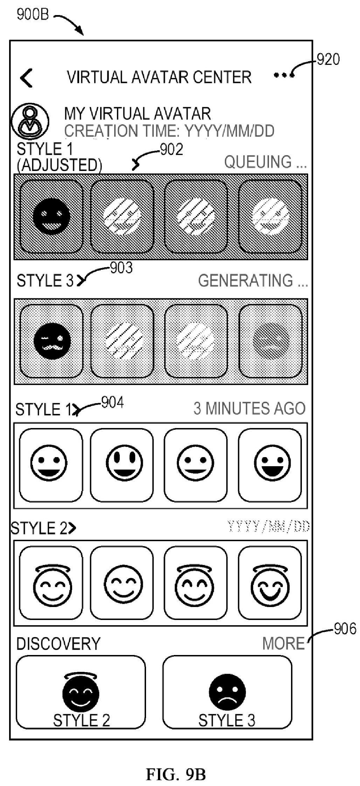

If the entry 901 is triggered, the avatar information interface of the virtual avatar shown in an example 900B of FIG. 9B may be presented. The basic information of the virtual avatar, such as a creation time, a thumbnail, etc., is displayed in the avatar information interface. The avatar information interface may also include viewing entries for images of different styles.

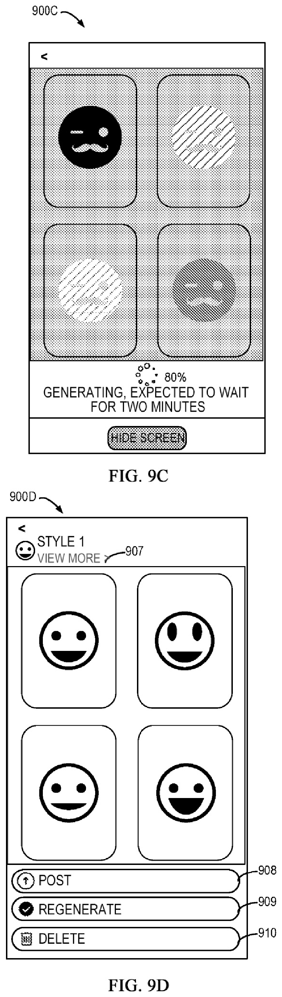

For example, a viewing entry 902 corresponds to an adjusted style 1, and images having this style are in a queue. A viewing entry 903 corresponds to a style 3, and images having this style are being generated. If the viewing entry 903 is clicked, the terminal device 120 may present an interface shown in an example 900C of FIG. 9C. The generation progress information of the image is displayed in this interface.

For another example, a viewing entry 904 corresponds to a style 1, and images having this style have been generated. If the viewing entry 904 is triggered, the terminal device 120 may present an example 900D of FIG. 9D. The interface of the example 900D includes generated images having the style 1, a viewing entry 907 for the style 1, a control 908, a control 909, and a control 910.

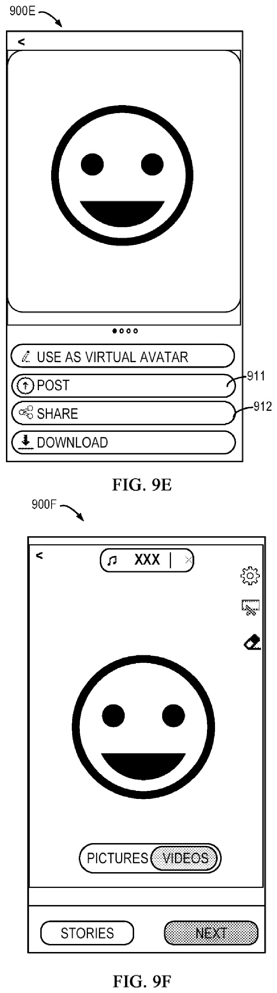

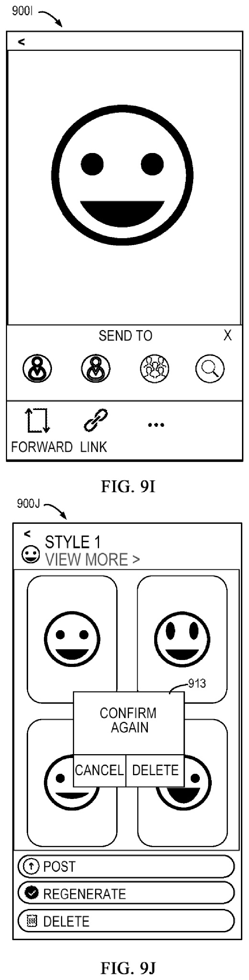

If the image in the example 900D is clicked, an example 900E shown in FIG. 9E may be presented. If a posting control 911 is triggered, the terminal device 120 may present an example 900F of FIG. 9F. The example 900F is an example of the content editing interface, which is similar to the content editing interface described above, and thus is not repeated. If a sharing control 912 is triggered, the terminal device 120 may present the interface shown in an example 900I shown in FIG. 9I.

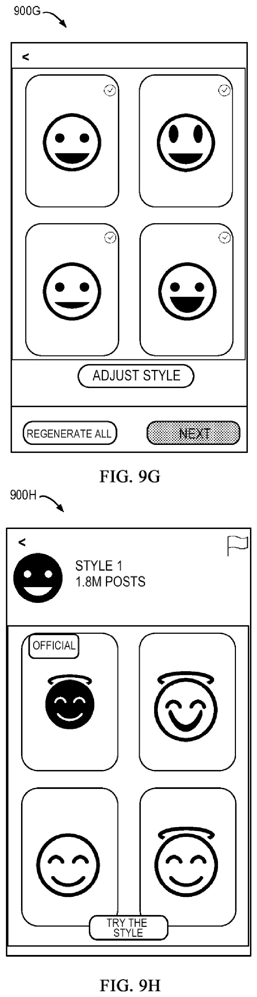

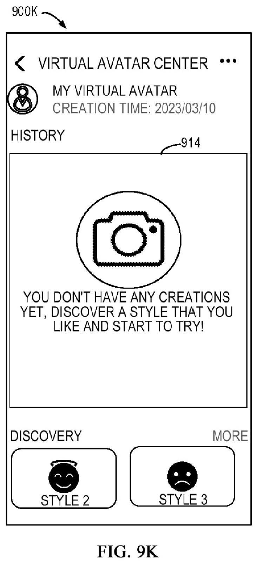

Continued to refer to FIG. 9D. If the posting control 908 is triggered, the terminal device 120 may present the content preview interface, as shown in an example 900G of FIG. 9G. The content preview interface is similar to the content preview interfaces described above, and thus is not repeated. If a re-generation control 909 is triggered, the terminal device 120 may trigger to re-generate images of the virtual avatar having the style 1. Accordingly, the terminal device 120 may present the generation progress interface of the image generation, which is similar to that described above. If a deletion control 910 is triggered, the terminal device 120 may present the interface shown in an example 900J of FIG. 9J. The interface includes a card 913 for the user to confirm whether to delete. In some embodiments, if all the stylized images are deleted, the terminal device 120 may present the interface shown in an example 900K of FIG. 9K. The interface includes prompt information 914 to prompt the user to select a style to generate images.

Continued to refer to FIG. 9D, if the viewing entry 907 is triggered, the terminal device 120 may present the style information interface of the style, for example, the style details page. FIG. 9H shows an example 900H of the style information interface, which is similar to that described in FIG. 8B described above, and thus is not repeated.

Continued to refer to FIG. 9B. the avatar information interface of the virtual avatar may also include a startup interface entry 906 for stylized image generation. The terminal device 120 may switch to presenting a startup interface of stylized image generation, such as the interface shown in FIG. 3B, in response to detecting a trigger operation for the startup interface entry 906.

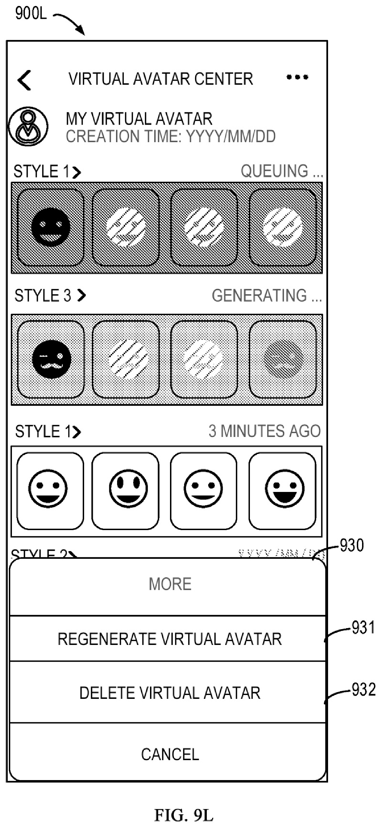

The avatar information interface of the virtual avatar may also include an entry 920 to provide more operations for the virtual avatar. The terminal device 120 may present the interface shown in an example 900L of FIG. 9L in response to detecting a trigger operation for an entry 920. The interface includes a panel 930. The panel 930 may include, for example, a control 931, a control 932, and the like. The terminal device 120 may re-generate the virtual avatar in response to receiving a trigger for the control 931. If the control 932 is triggered, the terminal device 120 may switch to presenting the interface shown in an example 900M, for example, in which a card 940 is presented. The card 940 includes prompt information for determining whether to delete the virtual avatar. The terminal device 120 may determine to delete the virtual avatar in response to receiving a trigger operation for the deletion control in the card 940.

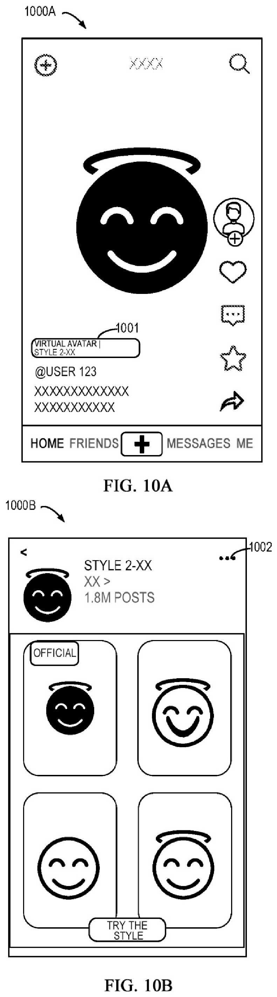

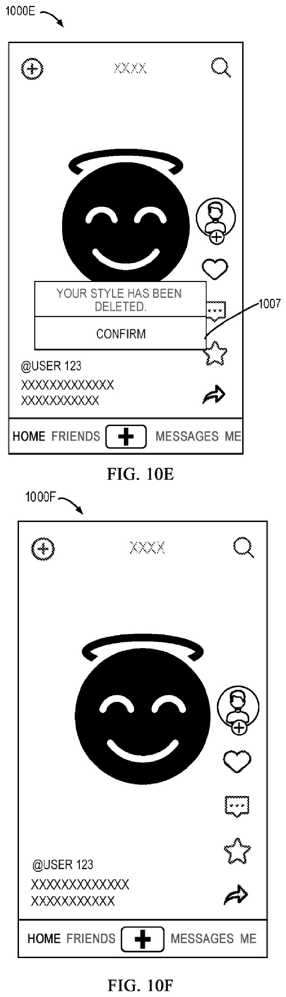

In some embodiments, as a creator of the style (including a creator of the parent style and a creator of the child style) may manage the created style. Some examples are described with reference to FIGS. 10A to 10F. The interface shown in an example 1000A of FIG. 10A includes a style use entry 1001 for a child style "style 2 - XX". If the style use entry 1001 is triggered, the terminal device 120 may present the style information interface of the style, as shown in an example 1000B of FIG. 10B.

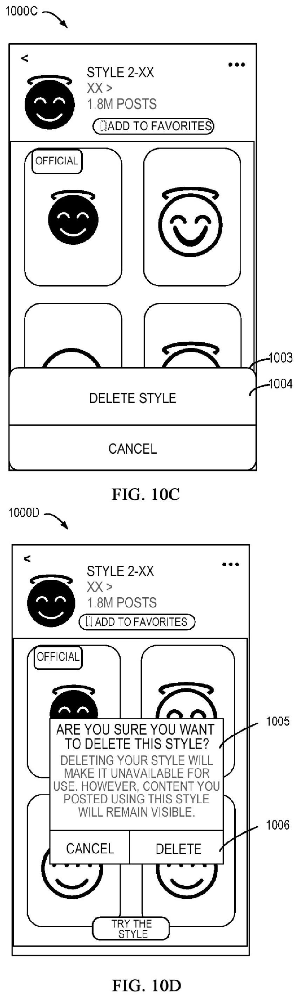

The interface of the example 1000B includes an entry 1002. If an entry 1002 is triggered, the terminal device 120 may present a panel 1003 in the interface shown in an example 1000C, as shown in FIG. 10C. The panel 1003 includes a deletion control 1004 for the style. If the deletion control 1004 is triggered, the terminal device 120 may present a card 1005, as shown in an example 1000D of FIG. 10D. If a deletion control 1006 in the card 1005 is triggered, the terminal device 120 may present a confirmation control 1007, as shown in an example 1000E of FIG. 10E. If the confirmation control 1007 is triggered, the interface shown in the example 1000A is updated to an interface shown in an example 1000F. That is, the style use entry for the style is no longer presented. However, the generated image having the style may still be presented.

Although in the above description, the request, the instruction or the selection from the user is received or detected through the interface elements such as the control, the entry, etc., it should be understood that this is only illustrative. In some embodiments, there may be no such interface elements, but the request, the instruction or the selection may be given by means of natural language (including text or voice).

### Example Process

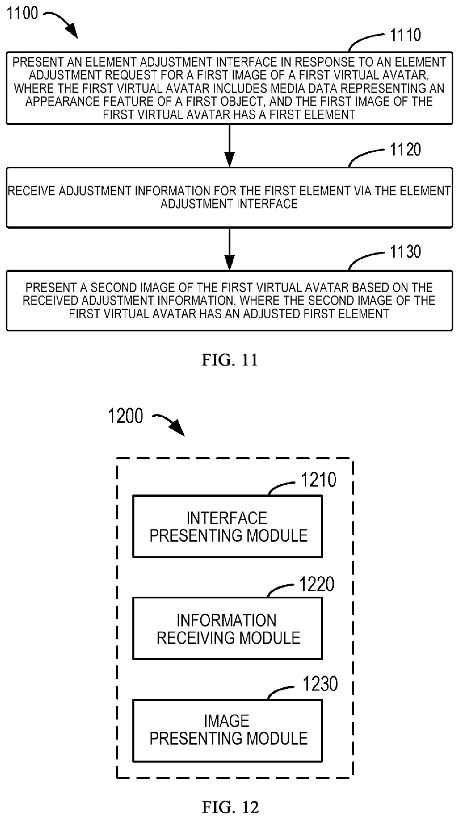

FIG. 11 shows a flowchart of a process 1100 for image generation according to some embodiments of the present disclosure. The process 1100 may be implemented at the terminal device 120. The process 1100 is described below with reference to FIG. 1.

At block 1110, the terminal device 120 presents an element adjustment interface in response to an element adjustment request for a first image of a first virtual avatar, where the first virtual avatar includes media data representing an appearance feature of a first object, and the first image of the first virtual avatar has a first element.

At block 1120, the terminal device 120 receives adjustment information for the first element via the element adjustment interface.

At block 1130, the terminal device 120 presents a second image of the first virtual avatar based on the received adjustment information, where the second image of the first virtual avatar has an adjusted first element.

In some embodiments, the element adjustment interface includes at least a part of fixed configuration information of the first element, and the process 1100 further includes: obtaining the second image based on the received adjustment information and the fixed configuration information.

In some embodiments, obtaining the second image includes: determining whether the adjustment information satisfies a preset condition in response to an image generation request associated with the adjustment information; and obtaining the second image based on the adjustment information and the fixed configuration information in response to the adjustment information satisfying the preset condition.

In some embodiments, the element adjustment interface includes at least one of: a first input control for receiving the adjustment information, first prompt information for the adjustment information, the first prompt information indicating an adjustable part of the first element, or the first image.

In some embodiments, the process 1100 further includes: ceasing displaying the first image in the element adjustment interface in response to a preset operation for the element adjustment interface; and increasing a presentation area of the first input control.

In some embodiments, the element adjustment request is received by: presenting a first content preview interface, the first content preview interface including the first image and an element adjustment entry; and receiving the element adjustment request via the element adjustment entry.

In some embodiments, presenting the first content preview interface includes: presenting a startup interface for image generation in response to a preset operation, the startup interface including respective image generation entries for a plurality of elements, the plurality of elements including the first element; obtaining the first image based on a trigger of the image generation entry for the first element; and presenting the first content preview interface in response to obtaining the first image.

In some embodiments, the preset operation includes at least one of: a trigger of a first startup interface entry in a content capturing interface, or a trigger of a second startup interface entry in an avatar information interface of the first virtual avatar.

In some embodiments, presenting the first content preview interface includes: presenting the avatar information interface of the first virtual avatar, the avatar information interface including a viewing entry corresponding to at least one element, the at least one element including the first element; and presenting the first content preview interface based on a trigger of the viewing entry corresponding to the first element.

In some embodiments, obtaining the second image includes: generating a prompt based on the adjustment information and the fixed configuration information; providing the prompt to a target model to obtain an output of the target model; and obtaining the second image based on the output.

In some embodiments, the process 1100 further includes: presenting indication information regarding a generation progress of the second image according to the generation progress of the second image before obtaining the second image.

In some embodiments, the process 1100 further includes: presenting a content editing interface for the second image in response to a posting request for the second image; presenting a content posting page for the second image in response to receiving editing confirmation via the content editing interface; and posting the second image in response to receiving posting confirmation via the content posting page.

In some embodiments, the content editing interface includes an option for a posting format of the second image.

In some embodiments, the process 1100 further includes: presenting an element customization interface in response to an element customization request; receiving customization information for a second element via the element customization interface; and presenting a third image of the first virtual avatar based on the received customization information, where the third image of the first virtual avatar has the second element.

In some embodiments, the process 1100 further includes: determining whether the customization information satisfies a preset condition in response to an image generation request associated with the customization information; and obtaining the third image based on the customization information in response to the customization information satisfying the preset condition.

In some embodiments, the element customization interface includes at least one of: a second input control for receiving the customization information, or second prompt information for the customization information, the second prompt information indicating a customizable element.

In some embodiments, the element customization request is received by: presenting a startup interface for image generation in response to a preset operation, the startup interface including respective image generation entries and respective element customization entries for a plurality of elements; and receiving the element customization request via the element customization entry.

In some embodiments, the process 1100 further includes: presenting an image obtaining interface in response to an avatar creation request; determining a plurality of images of the first object based on at least one of the following operations via the image obtaining interface: a selection operation of a captured image or an image capturing operation; and obtaining the first virtual avatar based on the plurality of images in response to avatar creation confirmation.

In some embodiments, the process 1100 further includes: presenting a creation progress interface according to a creation progress of the first virtual avatar in response to the avatar creation confirmation; and presenting a content recommendation interface in response to a preset operation for the creation progress interface, the content recommendation interface including creation progress information of the first virtual avatar.

In some embodiments, the process 1100 further includes: presenting an avatar information interface of the first virtual avatar, the avatar information interface including at least one of: a viewing entry corresponding to at least one element, or a startup interface entry for image generation.

In some embodiments, the avatar information interface of the first virtual avatar is presented in response to at least one of the following: a trigger of a notification message, the notification message indicating that a creation of the first virtual avatar is completed, or a trigger of a virtual avatar entry in a user information interface of a user associated with the first virtual avatar.

In some embodiments, the first element includes at least one of: an image style, an image background, or an image foreground.

### Example Apparatus and Device

Embodiments of the present disclosure further provide corresponding apparatuses for implementing the above methods or processes. FIG. 12 shows a schematic structural block diagram of an apparatus 1200 for image generation according to some embodiments of the present disclosure. The apparatus 1200 may be implemented as or included in the terminal device 120. Each module/component in the apparatus 1200 may be implemented by hardware, software, firmware, or any combination thereof.

As shown in FIG. 12, the apparatus 1200 includes an interface presenting module 1210, which is configured to present an element adjustment interface in response to an element adjustment request for a first image of a first virtual avatar, where the first virtual avatar includes media data representing an appearance feature of a first object, and the first image of the first virtual avatar has a first element. The apparatus 1200 also includes an information receiving module 1220, which is configured to receive adjustment information for the first element via the element adjustment interface. The apparatus 1200 also includes an image presenting module 1230, which is configured to present a second image of the first virtual avatar based on the received adjustment information, where the second image of the first virtual avatar has an adjusted first element.

In some embodiments, the element adjustment interface includes at least a part of fixed configuration information of the first element, and the apparatus 1200 also includes: an image obtaining module, which is configured to obtain the second image based on the received adjustment information and the fixed configuration information.

In some embodiments, the image obtaining module is further configured to: determine whether the adjustment information satisfies a preset condition in response to an image generation request associated with the adjustment information; and obtain the second image based on the adjustment information and the fixed configuration information in response to the adjustment information satisfying the preset condition.

In some embodiments, the element adjustment interface includes at least one of: a first input control for receiving the adjustment information, first prompt information for the adjustment information, the first prompt information indicating an adjustable part of the first element, or the first image.

In some embodiments, the apparatus 1200 also includes: a first image ceasing displaying module, which is configured to cease displaying the first image in the element adjustment interface in response to a preset operation for the element adjustment interface; and increase a presentation area of the first input control.

In some embodiments, the apparatus 1200 also includes an element adjustment module, which is configured to receive the element adjustment request by: presenting a first content preview interface, the first content preview interface including the first image and an element adjustment entry; and receiving the element adjustment request via the element adjustment entry.

In some embodiments, the element adjustment module is further configured to: present a startup interface for image generation in response to a preset operation, the startup interface including respective image generation entries for a plurality of elements, the plurality of elements including the first element; obtain the first image based on a trigger of an image generation entry for the first element; and present the first content preview interface in response to obtaining the first image.

In some embodiments, the preset operation includes at least one of: a trigger of a first startup interface entry in a content capturing interface, or a trigger of a second startup interface entry in an avatar information interface of the first virtual avatar.

In some embodiments, the element adjustment module is further configured to: present the avatar information interface of the first virtual avatar, the avatar information interface including a viewing entry corresponding to at least one element, the at least one element including the first element; and present the first content preview interface based on a trigger of the viewing entry corresponding to the first element.

In some embodiments, the image obtaining module is further configured to: generate a prompt based on the adjustment information and the fixed configuration information; provide the prompt to a target model to obtain an output of the target model; and obtain the second image based on the output.

In some embodiments, the apparatus 1200 also includes: an indication information presenting module, which is configured to present, based on a generation progress of the second image, indication information regarding the generation progress of the second image before obtaining the second image.

In some embodiments, the apparatus 1200 also includes: an editing interface presenting module, which is configured to present a content editing interface for the second image in response to a posting request for the second image; a second image presenting module, which is configured to present a content posting page for the second image in response to receiving editing confirmation via the content editing interface; and a second image posting module, which is configured to post the second image in response to receiving posting confirmation via the content posting page.

In some embodiments, the content editing interface includes an option for a posting format of the second image.

In some embodiments, the apparatus 1200 also includes: a customization interface presenting module, which is configured to present an element customization interface in response to an element customization request; a customization information receiving module, which is configured to receive customization information for a second element via the element customization interface; and a third image presenting module, which is configured to present a third image of the first virtual avatar based on the received customization information, where the third image of the first virtual avatar has the second element.

In some embodiments, the apparatus 1200 also includes: a customization information determination module, which is configured to determine whether the customization information satisfies a preset condition in response to an image generation request associated with the customization information; and a third image obtaining module, which is configured to obtain the third image based on the customization information in response to the customization information satisfying the preset condition.

In some embodiments, the element customization interface includes at least one of: a second input control for receiving the customization information, or second prompt information for the customization information, the second prompt information indicating a customizable element.

In some embodiments, an element customization module is configured to receive the element customization request by: presenting a startup interface for image generation in response to a preset operation, the startup interface including respective image generation entries and respective element customization entries for a plurality of elements; and receiving the element customization request via the element customization entry.

In some embodiments, the apparatus 1200 also includes: an obtaining interface presenting module, which is configured to present an image obtaining interface in response to an avatar creation request; a plurality of images determination module, which is configured to determine a plurality of images of the first object based on at least one of the following operations via the image obtaining interface: a selection operation of a captured image or an image capturing operation; and a virtual avatar obtaining module, which is configured to obtain the first virtual avatar based on the plurality of images in response to avatar creation confirmation.

In some embodiments, the apparatus 1200 also includes: a creation progress interface presenting module, which is configured to present a creation progress interface according to a creation progress of the first virtual avatar in response to the avatar creation confirmation; and a content recommendation interface presenting module, which is configured to present a content recommendation interface in response to a preset operation for the creation progress interface, the content recommendation interface including creation progress information of the first virtual avatar.

In some embodiments, the apparatus 1200 also includes an avatar information interface presenting module, which is configured to present the avatar information interface of the first virtual avatar, the avatar information interface including at least one of: a viewing entry corresponding to at least one element, or a startup interface entry for image generation.

In some embodiments, the avatar information interface presenting module is further configured to present the avatar information interface of the first virtual avatar in response to at least one of the following: a trigger of a notification message, the notification message indicating that a creation of the first virtual avatar is completed, or a trigger of a virtual avatar entry in a user information interface of a user associated with the first virtual avatar.

In some embodiments, the first element includes at least one of: an image style, an image background, or an image foreground.

The units and/or modules included in the apparatus 1200 may be implemented in various ways, including software, hardware, firmware, or any combination thereof. In some embodiments, one or more units and/or modules may be implemented using software and/or firmware, such as machine-executable instructions stored on a storage medium. In addition to machine-executable instructions or as an alternative, some or all units and/or modules in the apparatus 1200 may be implemented at least partially by one or more hardware logic components. As an example, rather than a limitation, example types of hardware logic components that may be used include field programmable gate arrays (FPGA), application specific integrated circuits (ASIC), application specific standards (ASSP), system on chip (SOC), complex programmable logic devices (CPLD), and on the like.

It should be understood that one or more steps in the above methods may be performed by an appropriate electronic device or a combination of electronic devices. Such an electronic device or a combination of electronic devices may include, for example, the terminal device 120 and the server 130 in FIG. 1.

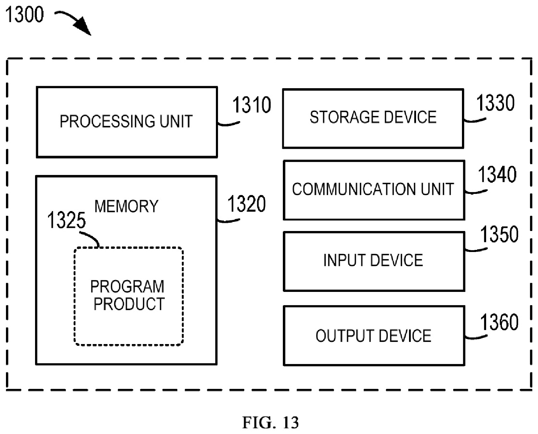

FIG. 13 shows a block diagram of an electronic device 1300 in which one or more embodiments of the present disclosure may be implemented. It should be understood that the electronic device 1300 shown in FIG. 13 is only illustrative, and should not constitute any limitation on the functions and scope of the embodiments described herein. The electronic device 1300 shown in FIG. 13 may be used to implement the terminal device 120 of FIG. 1 or the apparatus 1200 of FIG. 12.

As shown in FIG. 13, the electronic device 1300 is in the form of a general-purpose electronic device. The components of the electronic device 1300 may include, but are not limited to, one or more processors or processing units 1310, a memory 1320, a storage device 1330, one or more communication units 1340, one or more input devices 1350, and one or more output devices 1360. The processing unit 1310 may be an actual or virtual processor and may perform various processing based on the program stored in the memory 1320. In a multi-processor system, multiple processing units execute computer executable instructions in parallel to improve the parallel processing capability of the electronic device 1300.

The electronic device 1300 generally includes multiple computer storage medium. Such medium may be any available medium that is accessible to the electronic device 1300, including but not limited to volatile and non-volatile medium, removable and non-removable medium. The memory 1320 may be a volatile memory (for example, a register, a cache, a random access memory (RAM)), a non-volatile memory (such as a read-only memory (ROM), an electrically erasable programmable read-only memory (EEPROM), a flash memory), or any combination thereof. The storage device 1330 may be a removable or non-removable medium, and may include a machine-readable medium such as a flash drive, a disk, or any other medium, which may be used to store information and/or data and may be accessed within the electronic device 1300.

The electronic device 1300 may further include additional removable/non-removable, volatile/non-volatile memory medium. Although not shown in FIG. 13, a disk drive for reading from or writing into a removable, non-volatile disk (such as a "floppy disk"), and an optical disk driver for reading from or writing into a removable, non-volatile optical disk may be provided. In these cases, each drive may be connected to the bus (not shown) by one or more data medium interfaces. The memory 1320 may include a computer program product 1325, which has one or more program modules configured to perform various methods or acts of the various embodiments of the present disclosure.

The communication unit 1340 implements communication with other electronic devices through the communication medium. Additionally, the functions of the components of the electronic device 1300 may be implemented by a single computing cluster or multiple computing machines, which may communicate through communication connections. Therefore, the electronic device 1300 may use a logical connection with one or more other servers, network personal computers (PCs) or another network node to operate in a networked environment.

The input device 1350 may be one or more input devices, such as a mouse, a keyboard, a tracking ball, etc. The output device 1360 may be one or more output devices, such as a display, a speaker, a printer, etc. The electronic device 1300 may also communicate with one or more external devices (not shown) through the communication unit 1340 as needed, the external devices such as a storage device, a display device, etc., communicate with one or more devices that enable the user to interact with the electronic device 1300, or communicate with any device (such as a network card, a modem, etc.) that enables the electronic device 1300 to communicate with one or more other electronic devices. Such communication may be performed via input/output (I/O) interfaces (not shown).

According to an example implementation of the present disclosure, there is provided a computer-readable storage medium having computer-executable instructions stored thereon, where the computer-executable instructions are executed by a processor to implement the method described above. According to an example implementation of the present disclosure, there is further provided a computer program product, the computer program product is tangibly stored on a non-transitory computer-readable medium and includes computer-executable instructions, and the computer-executable instructions are executed by a processor to implement the method described above.

Various aspects of the present disclosure are described herein with reference to flowcharts and/or block diagrams of methods, apparatuses, devices, and computer program products implemented according to the present disclosure. It should be understood that each block of the flowchart(s) and/or block diagram(s), and combinations of blocks in the flowchart(s) and/or block diagram(s), may be implemented by computer-readable program instructions.

These computer-readable program instructions may be provided to a processing unit of a general-purpose computer, a special-purpose computer, or other programmable data processing apparatus to produce a machine, such that when these instructions are executed by the processing unit of the computer or other programmable data processing apparatus, an apparatus for implementing the functions/acts specified in one or more blocks of the flowchart(s) and/or block diagram(s) is produced. These computer-readable program instructions may also be stored in a computer-readable storage medium, these instructions cause a computer, a programmable data processing apparatus, and/or other devices to work in a specific way, and thus, the computer-readable medium storing the instructions includes a manufactured product, which includes instructions for implementing various aspects of the functions/acts specified in one or more blocks of the flowchart(s) and/or block diagram(s).

The computer-readable program instructions may be loaded onto a computer, other programmable data processing apparatus, or other devices, such that a series of operation steps are performed on the computer, other programmable data processing apparatus, or other devices to produce a computer-implemented process, so that the instructions executed on the computer, other programmable data processing apparatus, or other devices implement the functions/acts specified in one or more blocks of the flowcharts and/or block diagrams.

The flowcharts and block diagrams in the drawings show the possibly implemented architectures, functions, and operations of the systems, methods, and computer program products according to multiple implementations of the present disclosure. In this regard, each block in the flowchart(s) or block diagram(s) may represent a module, a program segment, or a part of instructions, and the module, the program segment, or the part of instructions contains one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagram(s) and/or flowchart(s), and combinations of the blocks in the block diagram(s) and/or flowchart(s) may be implemented by a special-purpose hardware-based system that executes specified functions or acts, or by a combination of special-purpose hardware and computer instructions.

The implementations of the present disclosure have been described above. The above description is illustrative, not exhaustive, and is not limited to the disclosed implementations. Without departing from the scope and spirit of the illustrated implementations, many modifications and changes will be apparent to those of ordinary skill in the art. The terms used herein are selected to best explain the principles of the implementations, the actual applications, or improvements to the technologies in the market, or to enable other ordinary skilled persons in the art to understand the implementations disclosed herein.

## Claims

1. A method of image generation, comprising:
presenting an element adjustment interface in response to an element adjustment request for a first image of a first virtual avatar, wherein the first virtual avatar comprises media data representing an appearance feature of a first object, and the first image of the first virtual avatar has a first element;
receiving adjustment information for the first element via the element adjustment interface; and
presenting a second image of the first virtual avatar based on the received adjustment information, wherein the second image of the first virtual avatar has an adjusted first element.

2. The method of claim 1, wherein the element adjustment interface comprises at least a part of fixed configuration information of the first element, and the method further comprises:
obtaining the second image based on the received adjustment information and the fixed configuration information.

3. The method of claim 2, wherein obtaining the second image comprises:
determining whether the adjustment information satisfies a preset condition in response to an image generation request associated with the adjustment information; and
obtaining the second image based on the adjustment information and the fixed configuration information in response to the adjustment information satisfying the preset condition.

4. The method of claim 1, wherein the element adjustment interface comprises at least one of:
a first input control for receiving the adjustment information,
first prompt information for the adjustment information, the first prompt information indicating an adjustable part of the first element, or
the first image.

5. The method of claim 4, further comprising:
ceasing displaying the first image in the element adjustment interface in response to a preset operation for the element adjustment interface; and
increasing a presentation area of the first input control.

6. The method of claim 1, wherein the element adjustment request is received by:
presenting a first content preview interface, the first content preview interface comprising the first image and an element adjustment entry; and
receiving the element adjustment request via the element adjustment entry.

7. The method of claim 6, wherein presenting the first content preview interface comprises:
presenting a startup interface for image generation in response to a preset operation, the startup interface comprising respective image generation entries for a plurality of elements, the plurality of elements comprising the first element;
obtaining the first image based on a trigger of an image generation entry for the first element; and
presenting the first content preview interface in response to obtaining the first image.

8. The method of claim 7, wherein the preset operation comprises at least one of:
a trigger of a first startup interface entry in a content capturing interface, or
a trigger of a second startup interface entry in an avatar information interface of the first virtual avatar.

9. The method of claim 6, wherein presenting the first content preview interface comprises:
presenting the avatar information interface of the first virtual avatar, the avatar information interface comprising a viewing entry corresponding to at least one element, the at least one element comprising the first element; and
presenting the first content preview interface based on a trigger of the viewing entry corresponding to the first element.

10. The method of claim 2, wherein obtaining the second image comprises:
generating a prompt based on the adjustment information and the fixed configuration information;
providing the prompt to a target model to obtain an output of the target model; and
obtaining the second image based on the output.

11. The method of claim 1, further comprising:
presenting, based on a generation progress of the second image, indication information regarding the generation progress of the second image before obtaining the second image.

12. The method of claim 1, further comprising:
presenting a content editing interface for the second image in response to a posting request for the second image;
presenting a content posting page for the second image in response to receiving editing confirmation via the content editing interface; and
posting the second image in response to receiving posting confirmation via the content posting page.

13. The method of claim 12, wherein the content editing interface comprises an option for a posting format of the second image.

14. The method of claim 1, further comprising:
presenting an element customization interface in response to an element customization request;
receiving customization information for a second element via the element customization interface; and
presenting a third image of the first virtual avatar based on the received customization information, wherein the third image of the first virtual avatar has the second element.

15. The method of claim 14, further comprising:
determining whether the customization information satisfies a preset condition in response to an image generation request associated with the customization information; and
obtaining the third image based on the customization information in response to the customization information satisfying the preset condition.

16. The method of claim 14, wherein the element customization interface comprises at least one of:
a second input control for receiving the customization information, or
second prompt information for the customization information, the second prompt information indicating a customizable element.

17. The method of claim 14, wherein the element customization request is received by:
presenting a startup interface for image generation in response to a preset operation, the startup interface comprising respective image generation entries and respective element customization entries for a plurality of elements; and
receiving the element customization request via the element customization entry.

18. The method of claim 1, further comprising:
presenting an image obtaining interface in response to an avatar creation request;
determining a plurality of images of the first object based on at least one of the following operations via the image obtaining interface:
a selection operation of a captured image, or
an image capturing operation; and
obtaining the first virtual avatar based on the plurality of images in response to avatar creation confirmation.

19. The method of claim 18, further comprising:
presenting a creation progress interface according to a creation progress of the first virtual avatar in response to the avatar creation confirmation; and
presenting a content recommendation interface in response to a preset operation for the creation progress interface, the content recommendation interface comprising creation progress information of the first virtual avatar.

20. The method of claim 1, further comprising:
presenting an avatar information interface of the first virtual avatar, the avatar information interface comprising at least one of:
a viewing entry corresponding to at least one element, or
a startup interface entry for image generation.

21. The method of claim 20, wherein the avatar information interface of the first virtual avatar is presented in response to at least one of the following:
a trigger of a notification message, the notification message indicating that a creation of the first virtual avatar is completed, or
a trigger of a virtual avatar entry in a user information interface of a user associated with the first virtual avatar.

22. The method of claim 1, wherein the first element comprises at least one of: an image style, an image background, or an image foreground.

23. An apparatus for image generation, comprising:
an interface presenting module configured to present an element adjustment interface in response to an element adjustment request for a first image of a first virtual avatar, wherein the first virtual avatar comprises media data representing an appearance feature of a first object, and the first image of the first virtual avatar has a first element;
an information receiving module configured to receive adjustment information for the first element via the element adjustment interface; and
an image presenting module configured to present a second image of the first virtual avatar based on the received adjustment information, wherein the second image of the first virtual avatar has an adjusted first element.

24. An electronic device, comprising:
at least one processing unit; and
at least one memory, the at least one memory being coupled to the at least one processing unit and storing instructions executable by the at least one processing unit, the instructions, when executed by the at least one processing unit, causing the electronic device to perform the method of any of claims 1 to 22.

25. A computer-readable storage medium having a computer program stored thereon, the computer program being executable by a processor to implement the method of any of claims 1 to 22.
